# EUROPEAN PATENT APPLICATION

(11) **EP 0 731 124 A1**
(43) Date of publication of application: **11.09.1996**
(21) Application number: 93904329.5
(22) Date of filing: 22.02.1993
(51) Int. Cl.: C08G 63/692, C08G 63/672, C08L 67/02, C08L 75/04, C08L 77/00, D01F 6/84

(54) **FLAME RETARDANT POLYESTER**

(71) Applicant: KANEBO, LTD., Tokyo 131 (JP); NICCA CHEMICAL CO., LTD., Fukui-shi Fukui 910 (JP)
(72) Inventor: KONDO, Yoshikazu, 5-31,Kokuga 2-chome, Yamaguchi 747 (JP); OKAMOTO, Kazuo, 15-24,Kamishinjo 2-chome, Ohsaka 533 (JP); YAMANAKA, Keio, 23-5,Midorigaoka 1-chome, Ohsaka 560 (JP); MUTAGAMI, Shogo, 6-6-304,Kanebo-cho, Yamaguchi 747 (JP); KUBOTA, Michio, 4-1,Kanebo-cho, Yamaguchi 747 (JP); SAITO, Hajime, 23-1,Bunkyo 4-chome, Fukui 910 (JP); SASADA, Yoshihiro, 23-1,Bunkyo 4-chome, Fukui 910 (JP); MAKINO, Masahiro, 23-1,Bunkyo 4-chome, Fukui 910 (JP)
(74) Representative: Hansen, Bernd, Dr. Dipl.-Chem.
(86) International application number: JP9300209
(87) International publication number: WO9419388

(57) **Abstract**

A flame-retardant polyester comprising a thermoplastic polyester and, introduced thereinto, at least one flame-retardant component comprising phosphorus-containing dicarboxylic acid or diol units selected from among three components represented by the following general formula: 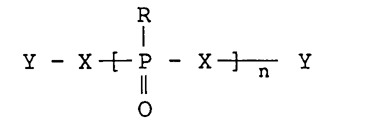 in a phosphorus atom content of 0.2-3.0 wt.% based on the total weight, and mouldings thereof, such as fiber, film and resin moldings, wherein R represents alkyl, aryl or aralkyl; and X represents a group selected from among -R₁COO-, OR₂O-(-OC-A-COOR₂O-)-a and -(-OR₂-)-bO-A-O-(-R₂O-)-c, wherein R₁ represents alkylene bonded to the phosphorus atom, R₂ represents C₂-C₄ alkylene, A represents a divalent aromatic residue, a=1-10, b=0-5, and c=0-5. The flame-retardant component has excellent heat resistance, does not sublime in the step of introducing the same into a high-temperaure polyester reaction system or during the molding of the polyester, is excellent in durability under repeated washing, light-fastness and whiteness, and does not deteriorate the properties inherent in thermoplastic polyester.

## Description

### Technical field

The present invention relates to a flame-retardant polyester modified with a flame-retardative phosphorus compound, and shaped products thereof. More particularly, this invention relates to flame-retardant copolyesters which are substantially not decreased in the degree of polymerization and melt viscosity, show virtually no discoloration, during the melt-shaping thereof, and generate no noxious gases upon exposure to high temperatures.

### Background art

Aromatic polyesters represented by polyethylene terephthalates, since they have excellent mechanical properties, have been utilized extensively as very useful materials in the manufacture of fibers, filaments, films and other plastic molded products. However, these polyesters have a drawback of inflammability, so that nowadays a demand for flame-retardation thereof has become greatly increased with recent deepening concern about fires. Particularly, the evolution of noxious gases, such as cyanic or halogenous gases, during fires, is in serious question. Therefore, the development of flame-retardant articles which evolve no noxious gases during contact with flames has been expected.

As a measure for making polyesters flame-retardant, various studies have so far been carried out. For example, there have been known several processes, such as post-treatment of shaped products, such as fibers or the like, with a flame- retardant; copolymerization of a polyester with a compound having functional groups and flame-retardative atoms; incorporation of a flame-retardant during the shaping; and the like.

However, the post-treatment have various kinds of drawbacks such that the treatment processes are intricate or yield uneven products, the hand of the shaped products is made to be harsh, or the flame retardancy is deteriorated by washing, or the like.

As a measure for eliminating such drawbacks, a so-called "copolymerization process" has been deemed to be effective, whereby a phosphorus atom, that is one of flame-retardative atoms, is introduced into the main molecular chain of the polyesters. Therefore, recently various investigations have been made on such a process and many proposals have been brought forth. For example, Japanese Patent Publication Nos. 21,050/'61 and 9,447/'63 disclose processes of incorporation of phosphonic acid or phosphonic acid esters. However, the phosphonic acid esters generally have drawbacks such that they are distilled out of the reaction system due to a low boiling point thereof, or cause three-dimensional side reactions in the manufacturing process of polyesters, whereby the shaping of the resulting polyesters is made to be difficult or impossible. In Japanese Patent Publication No. 20,771/'61 is disclosed a copolymerization process by incorporation of a phosphonic acid bisglycol ester having relatively a high boiling point temperature. However, this process has a drawback such that despite the high boiling point temperature, the above ester self-condenses in the step of copolymerization reaction, yielding low boiling cyclic compounds, considerable amount of which volatilizes out of the reaction system.

For the purpose of obviating such a drawback, for example, Japanese Patent Publication No. 13,386/'72 and Japanese Patent Laid-open Application No. 50-039,389 disclose copolymerization processes wherein polyesters are incorporated with a polymer of phosphonic acid, if required, together with a phosphate having a trifunctional group. According to such processes, the phosphonic polymer, since it has a high boiling point, is scarcely distilled out of the reaction system. However, these processes have a drawback such that in the case where the phosphonic polymer has a high degree of polymerization, the reactivity of terminal functional groups thereof is so low that the polymer may be hardly introduced into the polyester main chain, and, therefore, pose problems such that the mechanical properties of the resulting polyesters are deteriorated, unreacted materials are eluted, gelation by virtue of the trifunctional groups is caused, or the like. On the other hand, a reactant polymer having a degree of polymerization low enough to keep an adequate reactivity has a drawback such that it causes a side reaction and volatilizes out of the reaction system, or remarkably deteriorates the whiteness or mechanical properties of the polyesters due to its insufficient thermal stability, thus yielding products unserviceable in practice. In the above patent publications is described a working example wherein a bifunctional aromatic group having an excellent thermal stability is used. However, it has a drawback such that the terminal functional group, since it is a phenolic hydroxyl group, has a poor ester-formability and does not increase sufficiently the degree of polymerization.

Alternatively, Japanese Patent Laid-open Application No. 53-068,756 discloses a process wherein after an ester interchange reaction, phenylphosphonic acid and a polymerization catalyst are added to facilitate an esterification reaction under mild conditions and then polymerization is conducted. However, this process has a drawback such that, under such mild conditions as to restrain the formation of low boiling cyclic compounds, the esterification reaction does not proceed, and alternatively under such conditions as to allow the esterification reaction to well proceed, phosphorus compounds are distilled out of the reaction system, yielding unsatisfactory products. Thus, that any practically serviceable products have not yet been obtained is the present state.

In Japanese Patent Publication No. 13,479/'78 and Japanese Patent Laid-open Application No. 50-053,354 is disclosed polyesters copolymerized with carboxyphosphinic acid. Such a phosphinic compound shows no volatility but an excellent flame resistance. However, since its ester-forming functional groups are a carboxyl group and a P-OH group in a phosphoric bond, which have slightly different reaction rates, the products are lacking in uniformity. Furthermore, in respect of the heat resistance, the P-OH group is somewhat inferior to a P-O-C bond. Alternatively, in Japanese Patent Publication No. 41,610/'80 is disclosed a process wherein polyesters are copolymerized with a phosphorus-containing dicarboxylic acid compound derived from oxaphosphane oxide and itaconic acid. This process also provides flame-resistant products. However, it has a drawback such that since it is an intricate polycyclic compound, deterioration of crystallinity, melting point, physical properties or the like, by steric hindrance, or breaking of molecules by faint light or heat, is prone to occur.

German Patent Publication No. 1,232,348 discloses polyesters copolymerized with bis(p-carboxyphenyl) phosphinic acid. However, it is directed to modification of polyesters to attain an improvement of dyeability or the like and provides little flame retardancy as the phosphorus content of the copolymers is low. Alternatively, United States Patent Specification No. 4,127,566 discloses polyesters copolymerized with bis(carboxyethyl) methylphosphine oxide. Although these exhibit a good flame retardancy, the resulting copolymers have drawbacks, such as a considerably low melting point and a somewhat low heat resistance.

On the other hand, the processes of incorporation of a flame-retardant during the molding of the polyesters, different from the copolymerization processes, have an advantage such that the changeover of the type or grade of the materials can readily be performed without staining polymerizer kettles. These processes are particularly advantageous, since they can be employed even in factories installed with a continuous polymerization apparatus. However, many of these processes pose problems such that flame-retardants of some kinds show an insufficient compatibility with polyesters during melt-blending, are decomposed or volatilized by heat, or considerably deteriorate the physical properties of the polyesters by gelling or coloring. For example, in Japanese Patent Publication No. 32,865/'71 is disclosed a process of admixing perbromobenzene. Such a process has a drawback such that the flame-retardative perbromobenzene, since it is a low molecular halogenous compound, sublimes and deposits on the face of spinnerets, in the step of melt-spinning, and thus causes filament breakage, produces colored filaments or is readily extracted by dry cleaning. Alternatively, a process of blending polyesters with phosphites and phosphates has been known. However, the phosphites and phosphates, since they are low molecular compounds, are distilled out or volatilized, pyrolytically decompose, undergo an ester interchange reaction with polyesters with considerable lowering of the degree of polymerization and melt viscosity, or make the spinning difficult or impossible due to gelling. Even if the blended polyesters could be spun, the resulting yarns would have considerably poor yarn properties and often raise a question in practical application.

For the purpose of eliminating such difficulties, in Japanese Patent Publication Nos. 32,297/'72 and 32,299/'72 is disclosed a process of blending a polyester with a polyphosphonate obtained by poly-condensing an aromatic diol, such as hydroquinolic, bisphenolic or the like, with an arylphosphonic dichloride. Although it contains a phosphate linkage, the polyphosphonate is a polymer having a large molecular weight which scarcely lowers the degree of polymerization and melt viscosity of the resulting polyesters. Thus, this process, since it provides polyesters which are melt-shapable into shaped bodies having an excellent resistance to washing, can be said to be preferred. However, it has a drawback, probably attributable to an insufficient compatibility with polyesters, such that if the polyphosphonate is added in a quantity large enough to impart a sufficient flame retardancy, the physical properties of the resulting polyesters, particularly, the false-twistability of the yarns spun therefrom which is one of substantial characteristics, will be deteriorated, while if the quantity is adjusted to such a low level as not to deteriorate the physical properties, the flame-retardant performance can not be displayed sufficiently.

It has been generally well-known that combination use of phosphorus and a halogen considerably improves the self-extinguishing ability and flame retardancy by virtue of synergistic effects of the combination use. Based on such knowledge, the present inventors have proposed, in Japanese Patent Publication No. 24,943/'77, polyester compositions comprising a polyester and a halogen-containing polyphosphonate incorporated thereinto. Although excellent on account of a sufficient flame retardancy provided by incorporation of a small quantity of the polyphosphate, without deteriorating various physical properties, these compositions regrettably pose a problem of evolving noxious halogen gases upon contacting flames. Furthermore, in Japanese Patent Laid-open Application No. 49-018,145 is disclosed a process wherein an alkylene dicarboxylate is ester-interchanged with a glycol, then a glycol phosphonate is added to the ester interchange product and condensation polymerization is further conducted to produce a low molecular modified polyester which is then blended with a high molecular polyester. However, this glycol phosphonate considerably distilled out during the polymerization of the polyesters, yielding modified polyesters having only a low phosphorus content, so that it is not satisfactory as a flame- retardant. Such a flame-retardant has a disadvantage such that its addition in a large quantity is required in order to provide flame retardancy and, therefore, the various physical properties of the resulting polyesters will be considerably deteriorated. Even if such a phosphorus compound is dared to be added in a large quantity, with disregard to distilling out, high molecular polymers will not be obtained and the resulting polymers have a drawback such that if they are blended with a polyester, the physical properties of the polyesters will be considerably deteriorated. Thus, that any practically serviceable products have not yet been provided is the present state.

### Disclosure of invention

The task imposed upon the present invention is, in the outset, to eliminate various drawbacks of prior art as described above and to find out flame-retardative components which provide polyesters with flame retardancy by copolymerizing or blending a small quantity thereof with the polyesters, which evolve no noxious gases during contacting with flames.

Namely, the first object of the present invention is to provide flame-retardant polyesters with excellent whiteness, light-fastness and durability under washing, which can readily be shaped into fibers, films, plastic molded articles or the like, without deteriorating mechanical or thermal characteristics inherent in polyesters.

The second object of the present invention is to produce, with industrial feasibility and economical advantages, useful flame-retardant polyesters having an excellent heat resistance, with flame-retardative components which do not pose problems, such as sublimation, volatilization, decomposition, escaping out of a reaction system, gelation and the like, in the step of polymerization or blending with polyesters or shaping of the polyesters, and do not hinder the polymerization reaction.

The third object is to provide polyester compositions with an excellent flame retardancy which can be efficiently manufactured, without virtually staining manufacturing equipment and apparatuses, with the consequence that the changeovers of the grade and type of materials are facilitated and, moreover, without limiting the polymerization processes specifically to a batch process, continuous process or others.

The ultimate object is to keep disasters of lives in check into minimum when a fire breaks out, by providing flame- retardant polyester fibers, fabrics, films, shaped articles and the like with an extremely excellent self-extinguishability, which evolve no noxious gases harmful to human bodies when contacting with flames.

The first embodiment of the present invention to achieve the above objects is a polyester copolymer characterized by being obtained by copolymerizing a thermoplastic polyester with at least one of phosphorus-containing compounds or derivatives thereof, in such an amount that a phosphorus atom content may be 0.2-3.0 % by weight based on the total weight, said phosphorus-containing compounds or derivatives thereof being represented by the following general formula (1): 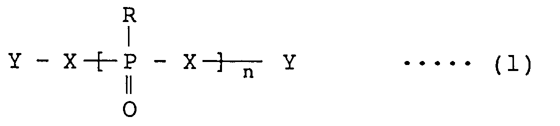 wherein R is an alkyl, aryl or aralkyl group having 1-9 carbon atoms, and X is selected from moieties represented by the following general formulae (2), (3) and (4):

- R₁COO - (2)

- OR₂O(̵OC - A - COOR₂O)̵ₐ (3)

(̵OR₂)̵_{b}O - A - O(̵R₂O)̵_{c} (4)

wherein R₁ is an alkylene group having 1-4 carbon atoms, binding to phosphorus, R₂ is an alkylene group having 2-4 carbon atoms, A is a halogen-free divalent aromatic residue, a = 1-10, and b and c = 0-5; when X is formula (2), n = 1 and Y is hydrogen or an alkyl or hydroxyalkyl group having 1-4 carbon atoms; and when X is formula (3) or (4), n = 1-10 and Y is hydrogen.

The second embodiment of the present invention is a polyester composition characterized by being obtained by blending a thermoplastic polyester with a polyphosphonate compound, in such an amount that a phosphorus atom content may be 0.2-3.0 % by weight based on the total weight, said polyphosphonate compound being obtained by polycondensing a compound represented by the following general formula (3') or (4'):

HOR₂O(̵OC - A - COOR₂O)̵ₐH (3')

H(̵OR₂)̵_{b}O - A - O(̵R₂O)̵_{c}H (4')

wherein R₂, A, a, b and c are the same as the above, with at least one P-monosubstituted phosphonic dichloride represented by the formula (5): 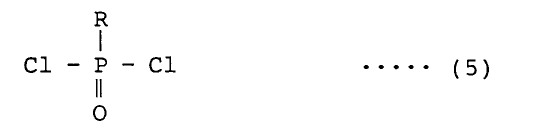 wherein R is the same as the above.

Furthermore, the third embodiment of the present invention is a polyester composition characterized by being obtained by copolymerizing a thermoplastic polyester-forming component with a comonomer selected from the group consisting of dicarboxylic acids, diols, diamines and diisocyanates, and at least one of phosphorus-containing compounds or derivatives thereof in such an amount that a phosphorus atom content may be at least 1.0 % by weight based on the total weight, said phosphorus-containing compounds or derivatives thereof being represented by the following general formula (1): 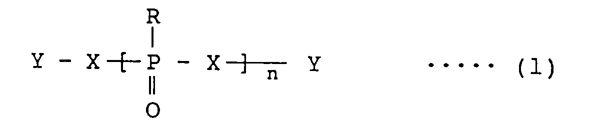 wherein R is an alkyl, aryl or aralkyl group having 1-9 carbon atoms, and X is selected from moieties represented by the following general formulae (2), (3) and (4):

- R₁COO - (2)

- OR₁O(̵OC - A - COOR₂O)̵ₐ (3)

(̵OR₁)̵_{b}O - A - O(̵R₂O)̵_{c} (4)

wherein R₁ is an alkylene group having 1-4 carbon atoms, binding to phosphorus, R₂ is an alkylene group having 2-4 carbon atoms, A is a divalent aromatic residue free from halogen atoms, a = 1-10, and b and c = 0-5; when X is formula (2), n = 1 and Y is hydrogen or an alkyl or hydroxyalkyl group having 1-4 carbon atoms; and when X is formula (3) or (4), n = 1-10 and Y is hydrogen, and then blending a phosphorus-free thermoplastic polyester with the resulting phosphorus-containing copolymer in such an amount that a phosphorus atom content in the blend may be 0.2-3.0 % by weight based on the total weight.

As the fiber-forming polyesters applicable to the present invention, can be used usually employed polyesters, namely, polyesters obtained through polycondensation of a dicarboxylic acid or a derivative thereof as described below with a glycol. As the dicarboxylic acid, examples are terephthalic acid, isophthalic acid, 2,6-naphthalene dicarboxylic acid, 1,5-naphthalene dicarboxylic acid, 4,4-diphenyldicarboxylic acid, bis(4-carboxyphenyl) ether, bis(4-carboxyphenyl) sulfone, 1,2-bis(4-carboxyphenoxy) ethane, 5-sodium sulfoisophthalic acid, 5-sulfopropoxyisophthalic acid, diphenyl-p,p'-dicarboxylic acid, p-phenylene diacetic acid, diphenyloxide-p,p'-dicarboxylic acid, trans-hexahydro-terephthalic acid, and ester-forming derivatives thereof, such as alkylesters, arylesters, ethyleneglycol esters thereof or the like. Particularly useful dicarboxylic acids, inter alia, comprise, as a main ingredient, at least 80 mol.% of terephthalic acid or 2,6-naphthalene dicarboxylic acid, which may be admixed with at least one of aromatic dicarboxylic acids other than the above, aliphatic dicarboxylic acids, such as adipic acid, sebacic acid, azelaic acid, decamethylene dicarboxylic acid or the like, and other ester-forming derivatives, in a small amount limited within 20 mol.%.

On the other hand, as a glycolic ingredient, examples are ethylene glycol, 1,2-propylene glycol, 1,4-butanediol, trimethylene glycol, 1,6-hexanediol, 1,4-cyclohexanediol, neopentyl glycol, 1,4-cyclohexanedimethanol, bisphenol A, bisphenol S, diethylene glycol, polyethylene glycol, polypropylene glycol, xylylene diol, 2,2'-dimethyltrimethylene glycol and derivatives thereof. Particularly useful diols, inter alia, comprise, as a main ingredient, at least 80% of ethylene glycol or 1,4-butanediol, which may be admixed with at least one of other glycolic ingredients and ester-forming derivatives in a small amount limited within 20 mol.% based on the diol ingredient.

Additionally, oxycarboxylic acid ingredients having both the carboxylic acid group and alcohol group in one molecular, such as 4-oxybenzoic acid, 4-hydroxyethoxybenzoic acid, oxypivalic acid or the like, can be employed, if required.

Insofar as the above polyesters are substantially linear polymers, these polyesters can be incorporated, if required, with a small amount of: a monofunctional compound, such as benzoic acid, benzoyl benzoic acid, acetic acid, methoxypolyethylene glycol, or the like; a three or more functional compound, such as glycerine, pentaerythritol, trimellitic acid, pyromellitic acid, phosphoric compounds; or ester-forming derivatives thereof.

The degree of polymerization of the polyesters may be such a degree of a usual fiber grade, as defined by an intrinsic viscosity [η] of preferably at least 0.5, more preferably 0.6-1.5, most preferably 0.65-1.0.

As the dicarboxylic acids or esters thereof, amongst the phosphorus-containing compounds represented by the general formula (1) which are used in the above first embodiment of the present invention, examples include those having X substituted with a moiety represented by the general formula (2), such as: 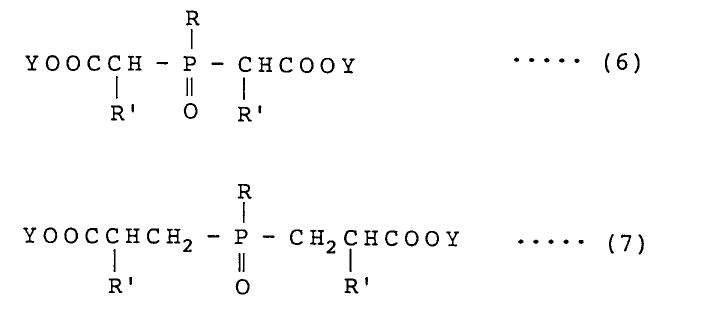 wherein R and Y are the same as the above-defined, and R'represents hydrogen or methyl group, or the like. Material examples of R in the above formulae are aryl groups or alkaryl groups, such as C₆H₅-, MeC₆H₄-, (Me)₂-C₆H₃-, Et-C₆H₄-, or the like; aralkyl groups, such as C₆H₅-CH₂-, (Me)C₆H₄-CH₂-, C₆H₅-CH₂CH₂-, (Me)₂C₆H₃-CH₂-, or the like; and the like. Useful, inter alia, are phenyl and tolyl groups, and particularly the phenyl group is most preferred because of its excellent heat resistance. Alternatively, R'represents hydrogen and methyl group. If it has 2 or more carbon atoms, R' will cause an undesirable steric hindrance.

Preferable examples of such phosphorus-containing dicarboxylic acids or esters thereof are more materially:
bis(2-carboxymethyl) phenylphosphine oxide,
bis(2-carboxymethyl) m-tolylphosphine oxide,
bis(2-carboxymethyl) p-tolylphosphine oxide,
bis(2-carboxymethyl) xylylphosphine oxide,
bis(2-carboxymethyl) benzylphosphine oxide,
bis(2-carboxymethyl) m-ethylbenzylphosphine oxide,
bis(2-carboxyethyl) phenylphosphine oxide,
bis(2-carboxy-isopropyl) phenylphosphine oxide,
bis(2-carboxyethyl) m-tolylphosphine oxide,
bis(2-carboxy-isopropyl) m-tolylphosphine oxide,
bis(2-carboxyethyl) p-tolylphosphine oxide,
bis(2-carboxyethyl) xylylphosphine oxide,
bis(2-carboxyethyl) benzylphosphine oxide,
bis(2-carboxy-isopropyl) benzylphosphine oxide,

bis(2-carboxyethyl) m-ethylbenzylphosphine oxide and cyclic acid anhidrides thereof, or methylesters, ethylesters, propylesters, butylesters, ethylene glycol esters, propylene glycol esters, butanediol esters, or the like, thereof.

As a process for manufacturing these phosphorus-containing dicarboxylic acid compounds, mention may be made of a manufacturing process wherein a P-substituted dichlorophosphine is reacted with an unsaturated compound, or a manufacturing process wherein a P-substituted dichlorophosphine or dichlorophosphine oxide is reacted with a Grignard reagent or an organometallic compound. Manufacturing processes wherein the above P-substituted phosphine is subjected to an addition reaction with an unsaturated compound, such as, malonates, for example, ethyl malonate, methyl malonate or the like, acrylonitrile, acrylic acid, an acrylate, methylmethacrylate or the like, are preferred from the viewpoints of yield in reaction, operatability, quality, etc.

For example, bis(2-carboxymethyl) phenylphosphine oxide can be obtained by oxidizing, with an oxidizing agent such as hydrogen peroxide or the like, a compound which has been prepared by reacting dichlorophenylphosphine with ethylmalonate, and then acidifying followed by heat-treating. Alternatively, for example, bis(2-carboxyethyl) phenylphosphine oxide can be obtained, as described by M.M. Rauhut, I. Hechenbleikner, Helen A. Currier, F.C. Schaefer and V.P. Wystrach in Am. Chem. Soc., 81, 1103-1107 (1959), by subjecting phenylphosphine to an addition reaction with acrylonitrile and then acidifying followed by alkaline hydrolysis. The above-describmers containing, as a chain constituting member, the above-described particular structural unit, in the conventional process for manufacturing polyesters from dicarboxylic acid ingredients mainly comprising, for example, terephthalic acid, and glycol ingredients mainly comprising ethylene glycol, can be obtained by adding and copolymerizing a phosphorus-containing dicarboxylic acid shown by the aforementioned general formula (1) having X represented by the general formula (2), with the above dicarboxylic acids having a P-substituted aryl group have an extremely improved heat resistance and are nonvolatile due to a high boiling point thereof, copolymers obtained by copolymerizing these compounds have excellent heat resistance and mechanical characteristics as compared with copolymers obtained from an asymmetric comonomer, and are advantageously applied in process steps undergoing high temperatures, such as about 200-300°C, for manufacturing polyester fibers, films and other shaped articles.

Polyester copolymers containing, as a chain constituting member, the above-described particular structural unit, in the conventional process for manufacturing polyesters from dicarboxylic acid ingredients mainly comprising, for example, terephthalic acid, and glycol ingredients mainly comprising ethylene glycol, can be obtained by adding and copolymerizing a phosphorus-containing dicarboxylic acid shown by the aforementioned general formula (1) having X represented by the general formula (2), with the above dicarboxylic acid ingredients. This phosphorus-containing dicarboxylic acid may be either a free dicarboxylic acid or cyclic anhydride, or an alkylester or glycol ester. The time for its addition is selected from either during the step of the ester interchange reaction, or before or during the polycondensation reaction, or right before the polycondensation reaction has been completed, as the case may be. Although it does not particularly affect the products of the present invention, the time of the addition is preferred to be before and during the polycondensation reaction, in order to provide homogeneous copolymers. Needless to say, the ester interchange reaction and polycondensation reaction are conducted in the presence of a conventional catalyst.

During manufacturing or shaping of such copolyesters, various additives, such as pigments, delustrants, fluorescent brighteners, heat stabilizers, UV absorbents, antioxidants, antistatic agents, etherification inhibitors such as organic amines, carboxylic acid amide or the like, can be used, if required.

The above phosphorus-containing dicarboxylic acid ingredient is added in such an amount that the phosphorus atom content in the resulting polyester may be 2,000-30,000 ppm, preferably 3,000-20,000 ppm, more preferably 5,000-15,000 ppm, by weight. Although it may of course depend upon composition of employed dicarboxylic acid and glycol ingredients, the above amount is generally within the range of 2-20 mol % of total acid ingredients. If it is less than 2,000 ppm by weight, the flame- retardant properties will become poor and if in excess of 30,000 ppm by weight, not only the flame-retardant effect will be saturated, but also various characteristics inherent in polyesters will be appreciably deteriorated, so that both the cases are not preferred. Needless to say, a polyester copolymer having a high phosphorus content can be prepared preliminarily and then incorporated with an ordinary polyester so as to provide a polyester having an aimed phosphorus content which is then shaped into shaped articles.

Then, the phosphorus-containing compounds represented by the general formula (1) which are used in the above first embodiment of the present invention include specific phosphorus-containing bishydroxyl compounds represented by the following general formula (8): 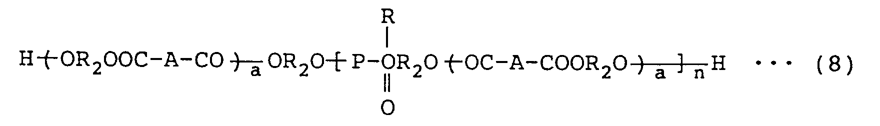 which is specified by defining X as the moiety represented by the general formula (3) in the formula (1), wherein R, R₂, A, a and n are the same as defined above. The above bishydroxyl compounds can be obtained generally by reacting at a low temperature, the phosphoric compound shown by the following general formula (5) with a dihydroxyl compound represented by the following general formula (3') having ester linkages.

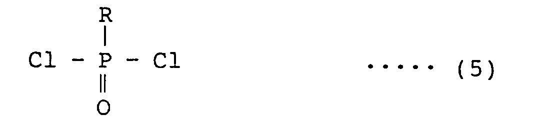

HOR₂O(̵OC - A - COOR₂O)̵ₐH (3')

wherein R, R₂, A and a are the same as defined above.

As the P-monosubstituted phosphonic dichloride represented by the general formula (5), examples include: alkyl- or cycloalkyl-dichlorophosphine oxides, such as methyldichlorophosphine oxide, ethyldichlorophosphine oxide, propyldichlorophosphine oxide, isopropyldichlorophosphine oxide, butyldichlorophosphine oxide, hexamethyldichlorophosphine oxide, octyldichlorophosphine oxide, 2-ethylhexyldichlorophosphine oxide, cyclohexyldichlorophosphine oxide, or the like; aryl-, alkaryl- or aralkyl-dichlorophosphine oxides, such as phenyldichlorophosphine oxide, tolyldichlorophosphine oxide, xylyldichlorophosphine oxide, or the like. Amongst these, the aryl-, alkaryl- or aralkyl-dichlorophosphine oxides which have excellent heat and weathering resistances are preferred and phenyldichlorophosphine oxide is particularly preferred.

The aromatic bishydroxyl compounds having an ester linkage, represented by the general formula (3'), can be prepared by: (a) subjecting a dicarboxylic acid or an ester derivative thereof comprising, as a skeleton, a halogen-free divalent aromatic residue A, to an addition reaction with an epoxide; (b) reacting the above dicarboxylic acid or an acid chloride thereof with a halogenated alcohol in the presence of an alkaline earth metal; (c) hydrolyzing a polyester according to a conventional method; or (d) subjecting the above dicarboxylic acid or its derivative to an ester interchange reaction with a glycol in the presence of a known catalyst. As the epoxide used in the process (a), examples include olefin oxides, such as ethylene oxide, propylene oxide, 1,2-butylene oxide or the like. As the halogenated alcohol used in the process (b), examples include ethylene chlorohydrin, 3-chloropropanol(1), 2-chloro-1-methylpropanol(1), 4-chlorobutanol(1), epichlorohydrin, or the like. Alternatively, in the case of the process (c) or (d), the above bishydroxyl compounds can be readily obtained by hydrolyzing, for example, polyethylene terephthalate, polybutylene terephthalate, polyethylene naphthalate or the like, with ethylene glycol or the like, in the presence of a known catalyst, or ester interchanging between terephthalic acid or dimethylterephthalate and ethylene glycol.

Whatever processes amongst the above may be effectively conducted. However, particularly the process (d) is advantageously used, because its ester interchange reaction is one of the conventional manufacturing processes of polyesters, from which the resulting bishydroxyl compounds can be readily stripped off. Such glycols or epoxy compounds can be selected appropriately according to the object and use. However, in the case where a high phosphorus atom content is required in the resulting phosphorus-containing bishydroxyl compound, ethylene glycol and ethylene oxide which have a small number of carbon atoms are preferred. The above reactions are controlled so that the value of a in the general formula (3') may become 1-2, preferably at most 1.5, in average. An averaged value of a in excess of 2 is not preferred, as it may cause an increase of the ethylene glycol component, thereby resulting in polyesters with deteriorated physical properties, or causing side reactions. Needless to say, an average value of a less than 1 is also not preferred, because of inhibitation of polymerization or deterioration of reactivity with phosphoric compounds.

In the general formula (3'), A which forms the skeleton of the dihydroxyl compounds is a halogen-free divalent aromatic residue, for example: 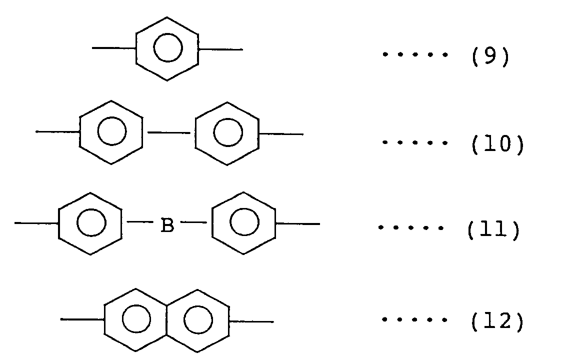 wherein B represents an alkylene or alkylidene group having 1-3 carbon atoms, O, S, or SO₂.

Needless to say, to this skeleton may be bonded an alkyl group having 1-3 carbon atoms, or sulfonic acid group, phosphoric acid group, a metal salt thereof, or the like. As dicarboxylic acids having such a skeleton, examples include terephthalic acid, isophthalic acid, 2,6-naphthalene dicarboxylic acid, 1,5-naphthalene dicarboxylic acid, 4,4-diphenyl dicarboxylic acid, bis(carboxyphenyl) ether, bis(4-carboxyphenyl) sulfone, 5-sodium sulfoisophthalic acid, and the like. These can be used in combination. If the number of the carbon atoms contained in the above dicarboxylic acids is too large, the percentage of the phosphorus atom content in the general formula (8) decreases, leading to deterioration of the flame retardant effects. Therefore, the number of the carbon atoms is preferred to be at most 20, more preferably at most 15. Particularly, terephthalic acid, naphthalene dicarboxylic acid, 5-sodium sulfoisophthalic acid and the like, inter alia, are preferred, because of their excellent heat stability and flame retardant effects.

The phosphorus-containing bishydroxyl compounds represented by the general formula (8) can be readily obtained by reacting a phosphoric compound as represented by the above general formula (5) with a dihydroxyl compound having alcoholic hydroxyl groups as represented by the general formula (3'). To this reaction can apply any techniques of conventional solution processes, melt processes, interfacial reaction processes, and the like. Particularly, the solution processes, inter alia, are preferred in view of facility of adjustment and purification. Additionally, as a solvent to be used in the solution processes are preferred those showing relatively a low polarity, such as tetrahydrofuran, trichlene, dichloroethane, benzene, toluene, xylene, chloroform, carbon tetrachloride, perchlene, or the like.

It is well-known that reactions under high temperatures are generally prone to induce side reactions. However, since the above P-monosubstituted phosphonic dichlorides represented by the general formula (5) abounds in reactivity, and the bishydroxyl compounds represented by the general formula (3') having alcoholic hydroxyl groups also abounds in reactivity, the reactions therebetween can readily proceed at low temperatures, suppressing side reactions. Therefore, the recurring number n in the general formula (8) can be adjusted arbitrarily according to the ratio of the reactants. If n is too large, the reactivity will undesirably decrease during polymerization of polyesters. In order to introduce the phosphorus-containing bishydroxyl compounds uniformly into the main chain of the polyesters, it is preferred to adjust n to fall in the range of 1-3, more preferably 1-1.5, in average.

Accordingly, the ratio in quantity of the charge reactants, namely, the number of moles of the bishydroxyl compound represented by the general formula (3') per 1 mole of the phosphoric compound represented by the general formula (5) is made to fall within the range of 2-4/3 moles, preferably 2-5/3 moles. With a molar ratio approaching to equimolar, the polymerization degree n of the polymer increases up to 4 or more. Alternatively, when the number of moles of the bishydroxyl compound represented by the general formula (3') exceeds 2, unreacted bishydroxyl compounds may be included in the resulting polyesters, causing deterioration of the physical properties of the polyesters, so that it is not preferred.

The thus obtained phosphorus-containing bishydroxyl compound represented by the general formula (8) is admixed and copolymerized with a thermoplastic polyester. The time of admixing can be selected from during the ester interchange reaction, before or during the condensation polymerization reaction, or immediately before the completion of the condensation polymerization reaction, as the case may be. Such a time of admixing does not limit the present invention. However, the phosphorus-containing bishydroxyl compound, since it already has a structure of a glycol ester, is preferred to be added in the step after the completion of the ester interchange reaction. As a matter of course, conventional catalysts are used in the ester interchange and condensation polymerization reactions.

The phosphorus-containing bishydroxyl compounds represented by the general formula (8), to be used in this embodiment of the present invention, are low molecular substances having a polymerization degree n of at most 2, with high active, esterifiable glycolic hydroxyl terminal groups at both ends thereof. Accordingly, these bishydroxyl compounds existing in a condensation polymerization reaction system do not impede the condensation polymerization reaction and are readily copolymerized to form homogeneous linear polyesters.

Particularly as aforementioned, phosphonic acid glycol esters, such as phenylphosphonic acid bishydroxyethyl ester or the like, are distilled out of the reaction system during polymerization, so that the phosphorus remaining percentage in the resulting copolymer is no more than 40%. In contrast, although similar to phenylphosphonic acid bishydroxyethyl ester, the phosphorus-containing bishydroxyl compound according to the present invention, having the structural formula (13): 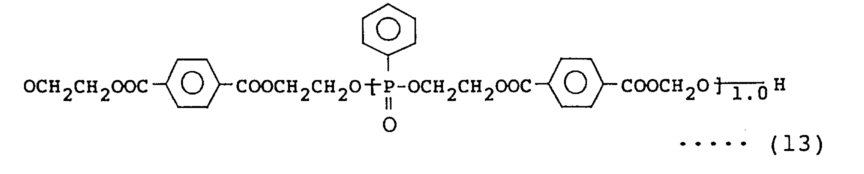 which is derived from the formula (8) by defining R as phenyl group, R₂ as ethylene group, A as phenylene group, and n = 1.0, has an excellent heat stability and does not produce low boiling substances at all. This is because this bishydroxyl compound is derived from a phosphonic compound and an aromatic dicarboxylic acid whose acid groups have previously been blocked with an ester linkage by reacting, for example, an epoxy compound or glycol therewith to form alcoholic hydroxyl terminal groups, so that the bishydroxyl compound comprises a stabilized, large molecule which contains ester linkages formed through the condensation reaction. Therefore, this bishydroxy compound is not distilled off during condensation polymerization and readily provides copolyesters. It is surprising indeed that the thus obtained polyesters have a phosphorus remaining percentage of not less than 98% of the theoretical value.

During the condensation polymerization or shaping of the copolyesters, additives can be used, if required, such as heat stabilizers, anti-coloring agents, pigments, delustrants, reaction promoters, fluorescent brighteners, UV absorbents, antioxidants, antistatic agents, etherification inhibitors such as organic amines, carboxylic acid amides or the like.

The phosphorus-containing bishydroxyl compound represented by the general formula (8) is added in such an amount that the phosphorus atom content in the resulting polyester may be 2,000-30,000 ppm, preferably 3,000-20,000 ppm, more preferably 5,000-15,000 ppm, by weight. Although it may, of course, depend upon the compositions of employed dicarboxylic acid and glycol ingredients, the above amount is generally within the range of 2-20 mol % of total glycol ingredients. If it is less than 2,000 ppm by weight, the flame retardant properties will become poor and if in excess of 30,000 ppm by weight, not only the flame retardant effect will be saturated, but also various characteristics inherent in polyesters will be appreciably deteriorated, so that both the cases are not preferred. Needless to say, a polyester copolymer having a high phosphorus content is preliminarily prepared, and then it can be incorporated with an ordinary polyester so as to provide a polyester having an aimed phosphorus content which is then shaped into shaped articles.

Then, the phosphorus-containing compounds represented by the general formula (1) which are used in the first embodiment of the present invention include specific phosphorus-containing bishydroxyl compounds represented by the following general formula (14): 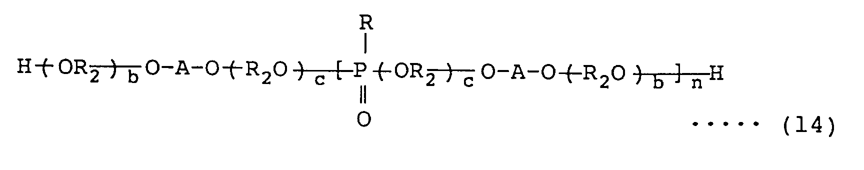 which is specified by defining X as the moiety represented by the general formula (4) in the formula (1), wherein R, R₂, A, b, c and n are the same as defined above. The above phosphorus-containing bishydroxyl compounds can be readily obtained generally by reacting, at a low temperature, the P-monosubstituted phosphonic dichloride represented by the above general formula (5) with a dihydroxyl compound having ether linkages represented by the following general formula (4').

H(̵OR₂)̵_{b}O - A - O(̵R₂O)̵_{c}H (4')

wherein R₂, A, b and c are the same as defined above.

The above aromatic dihydroxyl compounds represented by the general formula (4') can be readily obtained from a phenolic diol including A as a skeleton by (a) addition reaction with epoxide or (b) reaction with a halogenated alcohol in the presence of an alkaline earth metal. As the epoxide used in the process (a), examples include ethylene oxide, and as the halogenated alcohol used in the process (b), examples include ethylene chlorohydrin, 3-chloropropanol-1, epichlorohydrin, and the like.

In either of the above processes (a) and (b), use of reactants having a too large number of carbon atoms will decrease reactivity or induce side reactions, so that it is not preferred. In view of the reactivity or the phosphorus atom content in the resulting phosphorus-containing dihydroxyl compounds, ethylene oxide having 2 carbon atoms is most preferred. In the case of addition reaction with such ethylene oxide, although a substantially equimolar addition is preferred, aromatic dihydroxyl compounds with ethylene oxide added in an average number of moles of 1.5 or less, can be used. Addition of 2 moles or more is not preferred because it causes deterioration of physical properties or discoloration of polyesters, or other side reactions.

In the general formula (4'), A which forms a skeleton of the dihydroxyl compounds is a halogen-free divalent aromatic residue, for example:

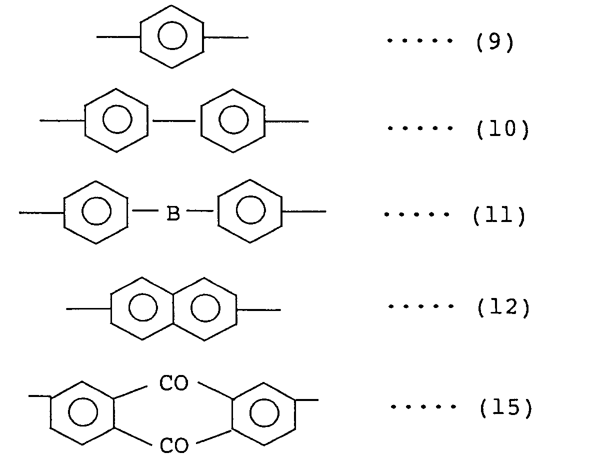

Needless to say, to this skeleton may be bonded an alkyl group having 1-3 carbon atoms, or sulfonic acid group, phosphoric acid group, a metal salt thereof, or the like. As diol compounds having such a skeleton, examples include hydroquinone, resorcin, 2-methylresorcin, 1,5-dihydroxybenzene-3-sodium sulfonate, 4,4'-dihydroxydiphenyl, 2,2'-dihydroxydiphenyl, bisphenol A, bisphenol B, 1,4-dihydroxynaphthalene, 1,5-dihydroxynaphthalene, 2,6-dihydroxynaphthalene, 4,5-dihydroxynaphthalene-2,7-disodium sulfonate, hydroxybenzophenone, 1,5-dihydroxyanthraquinone, 1,8-dihydroxyanthraquinone, or the like. These can be used alone or in combination. If these compounds contain too large number of carbon atoms, the percentage of the phosphorus atoms content in the general formula (14) decreases, leading to deterioration of the flame retardant effects. Therefore, the number of carbon atoms is preferred to be at most 20, more preferably at most 15. Particularly, inter alia, bisphenols, such as bisphenol A, bisphenol S or the like, and benzene sulfonates are preferred, because of their excellent heat stability and flame retardant effects.

To the reaction between the phosphoric compounds represented by the general formula (5) and the dihydroxyl compound having alcoholic hydroxyl groups represented by the general formula (4') can apply any techniques of conventional solution processes, melt processes, interfacial reaction processes and the like. Particularly, the solution processes, inter alia, are preferred in view of facility of adjustment and purification. During such a reaction, additives can be used, if required, such as heat stabilizers, anti-coloring agents, pigments, reaction promoters, fluorescent brighteners or the like. Additionally, as a solvent used in the solution processes are preferred those showing relatively a low polarity, such as tetrahydrofuran, trichlene, dichloroethane, benzene, toluene, xylene, chloroform, carbon tetrachloride, perchlene, or the like.

In the resulting phosphorus-containing bishydroxyl compounds represented by the general formula (14), a too large value of n is not preferred due to a low heat resistance, discoloration or a low reactivity during reaction or copolymerization with other compounds. A preferred value of n falls in the range of 1-3, more preferably 1-1.5, in average.

The phosphorus-containing bishydroxyl compounds represented by the above general formula (14) which are used in the present invention, as is seen from the above formula, have a symmetric molecular structure with respect to the P-O bond, with both the two terminal functional groups equivalent to one another, having the same reaction rates in various chemical reactions, such as esterification reactions, amide-forming reactions, or the like. By virtue of the symmetric structure, copolymers comprising, as a copolymeric ingredient, these compounds have more excellent heat resistance and dynamic characteristics as compared with copolymers comprising asymmetric copolymeric ingredients and, therefore, advantageously applied in the steps of manufacturing processes of polyester fibers where the copolymers undergo high temperatures of about 150-300°C.

With respect to the residue R in the above general formula, the aryl groups are, for example, C₆H₅-, Me-C₆H₄-, (Me)₂-C₆H₃- and Et-C₆H₄-, and the aralkyl groups are, for example, C₆H₅-CH₂-, Me-C₆H₄-CH₂-, C₆H₅-CH₂CH₂-, (Me)₂-C₆H₃-CH₂-, and the like. Useful, inter alia, are the phenyl group and tolyl group, particularly the phenyl group is most preferred because of excellent heat resistance.

The thus obtained phosphorus-containing bishydroxyl compound represented by the general formula (14) is admixed and copolymerized with a thermoplastic polyester. The time of the admixing can be selected from during the ester interchange reaction, before or during the condensation polymerization reaction, or immediately before the completion of the condensation polymerization reaction, as the case may be. Such a time of admixing does not limit the present invention. However, in order to obtain homogeneous copolymers, this compound is preferred to be added in the step before or during the condensation polymerization reaction. As a matter of course, the ester interchange and condensation polymerization reactions are conducted in the presence of conventional catalysts.

During manufacturing or shaping of such copolyesters, can be used, if required, various additives, such as pigments, delustrants, fluorescent brighteners, heat stabilizers, UV absorbents, antioxidants, antistatic agents, etherification inhibitors such as organic amines, carboxylic acid amides or the like.

The above phosphorus-containing dihydroxyl compound is incorporated in such an amount that the phosphorus atom content in the resulting polyester may be 2,000-30,000 ppm, preferably 3,000-20,000 ppm, more preferably 5,000-15,000 ppm, by weight. Although it may of course depend upon the composition of the employed dicarboxylic acid and glycol ingredients, the above amount is generally within the range of 2-20 mol % of total glycol ingredients. If it is less than 2,000 ppm by weight, the flame retardant properties will become poor and if in excess of 30,000 ppm by weight, not only the flame retardant effect will be saturated, but also various characteristics inherent in polyesters will be appreciably deteriorated, so that both the cases are not preferred. Needless to say, a polyester copolymer having a high phosphorus content is preliminarily prepared, and then it can be incorporated with an ordinary polyester so as to provide a polyester having an aimed phosphorus content which is then shaped into shaped articles.

The second embodiment of the present invention is a polyester composition characterized by being obtained by blending a thermoplastic polyester with a polyphosphonate compound, in such an amount that a phosphorus atom content may be 0.2-3.0 % by weight based on the total weight, said polyphosphonate compound being obtained by polycondensing a compound represented by the following general formula (3') or (4'):

HOR₂O(̵OC - A - COOR₂O)̵ₐH (3')

H(̵OR₂)̵_{b}O - A - O(̵R₂O)̵_{c}H (4')

wherein R₂, A, a, b and c are the same as defined above, with at least one P-monosubstituted phosphonic dichloride represented by the general formula (5): 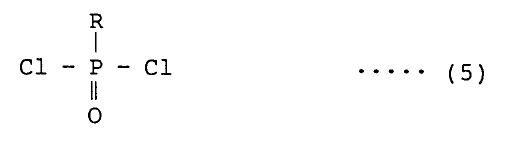 wherein R is the same as defined above.

The bishydroxyl compounds represented by the general formulae (3') and (4') and P-monosubstituted phosphonic dichlorides, to be employed, have been explained in detail in the explanation of the above first embodiment of the present invention. Particularly, in the process (a) of epoxide- addition reaction with aromatic dicarboxylic acids in the aforementioned processes (a)-(d) for providing bishydroxyl compounds, the molar ratio of the added epoxides to the aromatic dicarboxylic acid is preferred to be substantially equimolar to 1.5. With the above molar ratio close to 2, the formation of diethylene glycol will increase, causing undesirable deterioration of physical properties of the resulting polyesters. In the cases of the polyester hydrolysis process (c) and the ester interchange process (d) between a dicarboxylic acid and a glycol, the molar ratio of the aromatic dicarboxylic acid ingredient to the glycol ingredient is adjusted to be within the range of 1:1-1:1.5, in average. Namely, the value of a in the general formula (3') is preferred to be 1-2, more preferably 1-1.2, most preferably, substantially a=1, in average. The value of a in excess of 2 will decrease the phosphorus atom content in the flame-retardant polyphosphonate, resulting in deterioration of flame retardant performances of the polyesters blended with the polyphosphonate. If the amount of the blending polyphosphonate is increased in order to make up for the deterioration of flame retardant performances, the physical properties of the resulting polyesters will be undesirably deteriorated.

As the aromatic dicarboxylic acids for preparing the bishydroxyl compounds, examples include terephthalic acid, isophthalic acid, 2,6-naphthalene dicarboxylic acid, 1,5-naphthalene dicarboxylic acid, 4,4-diphenyldicarboxylic acid, bis(4-carboxyphenyl) ether, bis(4-carboxyphenyl) sulfone, 1,2-bis(carboxyphenoxy) ethane, 5-sodium sulfoisophthalic acid, 5-sulfopropoxyisophthalic acid, diphenyl-p,p'-dicarboxylic acid, and the like. Terephthalic acid, inter alia, which is for general purpose and inexpensive, is preferred.

In the second embodiment, the polyphosphonates can be obtained by dehydrochlorination polycondensation of a bishydroxyl compound of such an aromatic dicarboxylic acid or its derivative with a P-monosubstituted phosphonic dichloride represented by the general formula (5). By reacting 1 mol of this bishydroxyl compound with 0.8-1.2 mol, preferably 0.9-1.1 mol, of the phosphonic dichloride, high polymeric polyphosphonates can easily be obtained. Outside the above range, the resulting polymers are not adaptable to the present invention, and polyesters blended therewith are not preferred due to deterioration of physical properties.

With respect to the molecular weight of the polyphosphonates adaptable in this embodiment, although it depends upon the kind of the compound, since condensates of several molecules generally have extremely improved resistances to solvents and heat and compatibility with polyesters, a weight average molecular weight (determined by GPC) of 5,000 or more can achieve the object sufficiently. A molecular weight of less than 5,000 is not preferred, as the resistances to solvents and heat will be deteriorated or polyesters blended with such polyphosphonates are apt to be decreased in polymerization degree, melt viscosity or the like, or discolored. The further preferred molecular weight is at least 6,000, more preferably, in the range between 8,000 and 30,000.

The process for synthesizing such polyphosphonates can be selected, according to its object and use, from: (a) a solution polymerization process conducted in a solvent, such as hydrocarbons such as benzene, toluene, xylene, tetrahydrofuran or the like, halogenated hydrocarbons such as chloroform, tetrachloroethane, trichloroethane, trichloroethylene, carbon tetrachloride or the like, in the presence of dimethylformamide, dimethyl sulfoxide, dimethylacetamide or hexamethylphosphoramide and, if required, a hydrochloric acid adsorbent, for example, tertiary amine, or the like; (b) a melt polymerization process by heat-melt reaction without or with a metal halide catalyst, such as zinc chloride, calcium chloride, magnesium chloride or the like; and (c) an interfacial polymerization. The solution polymerization, inter alia, is particularly preferred because of easiness in adjustment of reaction conditions, polymerization degrees, purification, or the like. At all events, although the polymerization conditions depend on the polymerizaiton process and compounds employed therefor, the compounds represented by the general formulae (3'), (4') and (5), since these have highly reactive functional groups, do not require temperatures as high as above 200°C which is required by compounds having a low reactive group, such as phenolic hydroxyl group, and the reaction easily proceeds at low temperatures of at most 180°C, preferably at most 150°C, more preferably at most 120°C. Since they can provide high polymers without inducing side reactions, the reactions at low temperatures are advantageous.

The present invention includes polyester compositions comprising a polyester and a high polymeric polyphosphonate blended therewith in a quantity as phosphorus atom of 0.2-3.0 % by weight, preferably 0.4-3.0 % by weight, more preferably 0.5-2.0 % by weight, based on the total weight. In the case where the blended polyphosphonate is less than 0.2 % by weight as phosphorus atom based on the polyester composition, the flame retardant effect will be insufficient, while its blending in an unnecessarily high quantity, such as over 3 % by weight, is not preferred, because the flame retardant effect will be saturated and, moreover, various physical properties of the polyester composition will be greatly deteriorated.

The polyester compositions in the second embodiment of the present invention comprise the aforementioned polyester and the aforementioned polyphosphonate blended therewith. The blend process may be conducted on any step after the completion of the condensation polymerization of the polyester. Employable processes therefor are, for example, a process wherein the polyester is admixed with the polyphosphonate in a polymerizer kettle after the condensation polymerization has been completed and then melt-shaped; a process wherein the polyester polymer is once pelletized or pulverized, then melted again, admixed with the polyphosphonate and then the blend is shaped; and a process wherein masterchip containing the polyphosphonate in a high concentration is prepared, then the masterchip is admixed and diluted with an ordinary polyester in a predetermined quantity, and shaped. As a blender, use may be made of a conventional autoclave equipped with agitating blades, kneader, Henschel mixer, static mixer or the like. However, in the process of manufacturing flame-retardant polyester compositions by blending a polyester with the polyphosphonate according to the present invention, the time for mixing and melting is preferred to be as short as possible. Particularly from this point of view, the static mixer is preferred, because when it is used in the step of shaping, the static mixer can be fixed, for example, within a spinneret or a conduit leading thereto, so that the melt can be extruded from the spinneret and spun into filaments in an extremely short time after mixing in the static mixer.

The polyester compositions of this embodiment may contain known additives for polyesters, if required, such as pigments, dyes, antistatic agents, light stabilizers, heat stabilizers, UV absorbents, antioxidants, fluorescent brighteners, carbon black, titanium dioxide, phosphoric compounds or the like.

As explained above, the polyester compositions in the second embodiment of the present invention do not sublimate or volatilize flame-retardants during the shaping of the compositions into fibers, filaments, films or plastic molded articles. Therefore, these compositions can be shaped industrially with ease, and the thus obtained shaped articles are industrially useful, since they have a good flame retardance, extremely high whiteness, excellent durability under washing, light-fastness and heat resistance, together with compatibility with disperse dyes, stability to ultraviolet rays and the like.

Particularly, when the blending polyphosphonate consisting of, for example, bis(ω-hydroxyethyl) terephthalate, as the bishydroxyl compound represented by the general formula (3'), and phenylphosphonic dichloride, as the phosphonyl dichloride represented by the general formula (5), the polyester composition in this embodiment has the following structure: 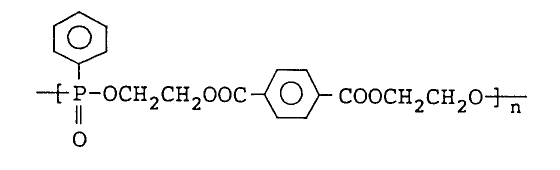 which is similar to the structure of polyethylene terephthalate and, therefore, has a high compatibility with the polyethylene terephthalate and less hindrance to crystallization, so that the polyester compositions in this embodiment have remarkable features characteristic of very excellent durability even under a severe treatment such as false-twisting or the like.

The third embodiment of the present invention is a polyester composition characterized by being obtained by copolymerizing thermoplastic polyester components with a comonomer selected from the group consisting of dicarboxylic acids, diols, diamines and diisocyanates, and at least one of phosphorus-containing compounds or derivatives thereof in such an amount that a phosphorus atom content may be at least 1.0 % by weight based on the total weight, said phosphorus-containing compounds or derivatives thereof being represented by the general formula (1): 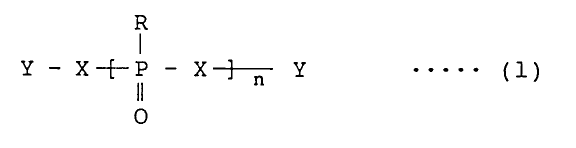 wherein R, X, Y and n are the same as defined before, and then blending a phosphorus-free thermoplastic polyester with the resulting phosphorus-containing copolymer in such an amount that the phosphorus atom content may be 0.2-3.0 % by weight based on the total weight.

As the phosphorus-containing copolymers comprising the phosphorus-containing compound constituent represented by the above general formula (1), employable examples include copolymers comprising another compound constituent bonded to the above constituent with ester, amide, urethane, ether or the like linkages.

The ester linkages can be formed by reacting, for example, a phosphorus-containing dicarboxylic acid with a diol compound having two OH-groups, or a phosphorus-containing diol with a dicarboxylic acid.

As such a dicarboxylic acid, preferable examples are aliphatic dicarboxylic acids, such as adipic acid, sebacic acid, azelaic acid or the like, derivatives thereof and ester-derivatives, and aromatic dicarboxylic acids, such as terephthalic acid, isophthalic acid, 2,6-naphthalene dicarboxylic acid, 1,5-naphthalene dicarboxylic acid, 4,4-diphenyl dicarboxylic acid or the like, derivatives thereof, and alkylester, arylester and ethylene glycol ester derivatives thereof, and the like, which have a skeletal structure similar to those of constituents of polyester fibers.

On the other hand, as a diol ingredient, examples are ethylene glycol, 1,2-propylene glycol, 1,4-butanediol, trimethylene glycol, 1,6-hexanediol, 1,4-cyclohexanediol, neopentyl glycol, 1,4-cyclohexane dimethanol, bisphenol A, bisphenol S, diethylene glycol, polyethylene glycol, polypropylene glycol, and the like. Alternatively, the copolymers having urethane linkages can be obtained by reacting a phosphorus-containing diol compound as represented by the above general formula (1) with a diisocyanate compound.

Furthermore, the copolymers having amide linkages can be obtained by reacting a phosphorus-containing dicarboxylic acid compound as represented by the above general formula (1) with a diamine.

The composition is set up so that the phosphorus atom content in the phosphorus-containing copolymer may be at least 1 %, preferably at least 3 %, more preferably 4-10 %, by weight. If the phosphorus atom content is less than 1 % by weight, the quantity of the phosphorus-containing copolymer to be incorporated with the thermoplastic polyester has to be increased in order to develop flame retardance, thus causing drawbacks of the obtained polyester composition, such as thermal degradation, deterioration of mechanical properties, increase of discoloration, or the like.

If the polymerization degree of the phosphorus-containing copolymers is too low, the heat resistance is decreased, whereby thermoplastic polyesters blended therewith are remarkably deteriorated. Alternatively, if the polymerization degree is too high, a big power or power tools will be required for mixing, or sufficient mixing cannot be achieved so that it causes a drawback of the resulting fibers, such as low homogeneity. The polymerization degree is preferred to be at most 5, more preferably 10-100. The polymerization degree should be appropriately decided according to the blending process of the phosphorus-containing copolymer. When it is incorporated on the initial stage of the polymerization of the thermoplastic polyesters, for example, after the completion of the ester interchange reaction, or the like, the polymerization degree is preferred to be at least 50. When it is incorporated on the middle stage or thereafter of the polymerization of the polyesters, the polymerization degree is preferred to be about 20-70.

The incorporation of the phosphorus-containing copolymer with the polyesters is conducted at the time of the commencement of the polymerization of the polyesters. Preferably, it is conducted after the completion of the ester interchange reaction to replace the terminal groups of the two carboxylic acids of the terephthalic acid with ethylene glycol. More preferably, it is conducted before the completion of the polymerization reaction of the polyesters, for example, before the intrinsic viscosity [η] has been reached 0.4, more preferably 0.1-0.3. When the intrinsic viscosity is less than 0.1, the polymerization system of the polyesters contains too much of the alcohol ingredient, such as ethylene glycol or the like, to introduce the phosphorus-containing copolymer uniformly into the thermoplastic polyesters.

The blend ratio of the phosphorus-containing copolymer is not particularly limited insofar as it is in a range such as not to deteriorate mechanical properties, thermal properties, flame retardance, or the like, of the polyester compositions. However, the phosphorus-containing copolymer is added to the polyester in an amount of preferably at most 25 %, more preferably at most 15 %, by weight based on the polyester, so that the phosphorus atom content in the resulting polyester composition may be 2,000-30,000 ppm, preferably 3,000-20,000 ppm, more preferably 5,000-15,000 ppm, by weight. If the phosphorus atom content is less than 2,000 ppm, the resulting polyester composition will be poor in flame retardance, and if it is more than 30,000 ppm, not only the flame retardant effect will be saturated but also various physical properties inherent in polyesters will be greatly deteriorated, so that both the cases are not preferred.

The polyester composition obtained by incorporating the phosphorus-containing copolymer therewith can be spun by ordinary melt-spinning processes. Any of spin-draw, high-speed spinning, and conjugate spinning processes is applicable. The fineness of the fiber generally is at least 1 denier and further finer fibers can be spun, according to their use.

The cross-sectional shape of the fibers can be not only circular but also non-circular such as trilobal, flat, quadrilobal, multilobal, annular or the like.

Furthermore, in the spinning process may be employed, if required, pigments, delustrants, fluorescent brighteners, heat stabilizers, UV absorbents, antioxidants, antistatic agents, etherification inhibitors such as organic amines, organic carboxylic acid amides or the like, the same as in spinning processes of usual fibers.

### Best mode for carrying out the invention

The present invention will be explained hereinafter more concretely by way of example. In the examples, "part" means all "part by weight".

The intrinsic viscosity [η] was determined by the usual method in a mixed solvent of phenol/tetrachloroethylene = 6/4 at 20°C. The melting point was found from the absorption peak in DSC. The evaluation of the flame retardance was represented by the number of times of flame contact in the measurement according to JIS L-1091, Method-D, i.e., the 45° coil method. Namely, a bundle of spun filaments was cut into 22 cm long. One gram of the cut filaments was fixed at one end, clamped the other end with a hand-drill, twisted 20 turns, doubled back and left untwisted naturally into twine about 10 cm long. This twine was inserted into a coil which was fixed with an angle of inclination of 45°. Flame was contacted with the bottom end of the twine in the coil and the number of times of flame contact which required to burn out 10 cm twine was determined. The average value of 10 measurements represented flame retardance. The number of times of flame contact is usually at least 2.3, preferably at least 3.5 (however, in the evaluation of LOI, generally at least 23 times, preferably at least 26 times are required). Regarding the light-fastness, a test sample was irradiated for 40 hours in a carbon-arc fadeometer. Then, gray yarns were graded on the gray scale and dyed yarns were graded on the blue scale. Yarns of no discoloration were graded as grade 5, those extremely discolored were graded as grade 1 and five grades were set up from grade 5 to grade 1. The light-fastness is preferred to be at least grade 4. With regard to the whiteness, the same as the light-fastness, a sample yarn was wound around a black cardboard and measured with a differential colorimeter. The whiteness was represented by b-value. The higher the b-value is meant the more yellowish shade. The b-value is preferred to be not more than 3.5.

### Manufacturing Example 1

A 1-liter four-neck flask was equipped with a stirrer, dropping funnel, nitrogen feed pipe and a reflux condenser. Flowing nitrogen gas, 300 cc ethanol was added. Then, cooling with ice, 23.8 g small pieces of metallic sodium were added gradually, while stirring. After the metallic sodium had completely disappeared, the reaction solution was heated up to 50°C and 166 g diethyl malonate was added through the dropping funnel over 2 hours. Then, gradually dripping 92 g dichloro phenylphosphine, the reaction was conducted for 2 hours until the reaction solution showed neutral. In this case, since exothermic heat evolves violently, the reaction solution is cooled, if required, with a water bath or ice bath.

After the reaction had been completed, the solvent was distilled off, the residue was added with water and thereby formed sodium chloride was separated from the reactant. Then, the reaction mixture from which sodium chloride had been removed was introduced into a 130 cc mixture of conc. hydrochloric acid with water and heating was conducted at the reflux temperature over 6 hours to homogenize the solution. Then, the solvent was distilled off, the residue was recrystallized with methanol and thus 98.6 g bis(2-carboxymethyl) phenylphosphine was obtained. The result of the elemental analysis of this product was well in agreement with theoretical values.

| | | | |
|---|---|---|---|
| Theoretical value, | C:53.00, | H:4.90, | P:14.58 |
| Analytical value, | C:52.87, | H:4.59, | P:14.32 |

### Manufacturing Example 2

83 g of the bis(2-carboxymethyl) phenylphosphine obtained in Manufacturing Example 1 was dissolved in 2.5 fold quantity of acetic acid and the inside temperature was kept at 60°C to homogenize the solution. While the inside temperature was kept at 60-70°C under stirring, 68 g of 30% hydrogen peroxide solution was dripped in for about 1 hour. Then, after heating at 75°C for 15 minutes, activated carbon was added and the temperature was raised to 100°C, and further heating with stirring was conducted for 15 minutes. After cooling, acetic acid was stripped off with an evaporator and 88g bis(2-carboxy) phenylphosphine oxide was obtained. The result of the elemental analysis of this product was well in agreement with theoretical values.

| | | | |
|---|---|---|---|
| Theoretical value, | C:49.60, | H:4.58, | P:12.79 |
| Analytical value, | C:49.35, | H:4.29, | P:12.48 |

### Example 1

95 parts of dimethyl terephthalate, 72 parts of ethylene glycol, 7 parts of bis(carboxymethyl) phenylphosphine oxide obtained in the above manufacturing example and 0.04 part of zinc acetate were introduced into a reaction vessel, and the ester interchange reaction was conducted by heating from 150°C to 220°C for 3 hours, as the methanol being produced was continuously distilled off from the reaction system. Then, 0.03 part of antimony trioxide was added and the internal pressure was gradually decreased by increasing the temperature until 280°C and 0.3 mmHg were finally reached. The condensation polymerization was conducted at 280°C and 0.3 mmHg for 3 hours. Then, the resulting polymer was extruded into strands which were then cut to pellets of 2.5 mm dia.×3 mm length. The resulting polymer had an intrinsic viscosity [η] of 0.60 and a melting point of 248°C.

These pellets were dried to a moisture content of 0.005 %, and then melt-spun with an extruder at a spinning temperature of 288°C and a take-up speed of 800 m/min. Then, the spun yarn was drawn with a roller heater at 85°C at a draw ratio of 3.9 times and a draw rate of 1,000 m/min. and heat-set on a plate heater at 150°C to provide a 75d/24f drawn yarn. The yarn had a good quality showing a tensile strength of 4.7-5.8 g/d and an elongation at break of 30-40%.

This drawn yarn was doubled, knit on a circular knitting machine into a hose which was then scoured and tested for flame retardance. In the flame retardance test, a swatch 100 mm long and 1 g weight was cut out from the hose and the number of times of flame contact according to the 45° coil method was found. The results are shown in Table 1.

**Table 1**

| P-content (ppm) | Number of times of flame contact (time) | LOI value | Remarks |
|---|---|---|---|
| 0 | 1.1 | 20.0 | Comparative Example |
| 1500 | 2.0 | 22.0 | Comparative Example |
| 2000 | 3.1 | 24.0 | Invention |
| 2500 | 3.2 | 25.5 | Invention |
| 3000 | 3.9 | 26.5 | Invention |
| 4800 | 4.1 | 31.0 | Invention |
| 7200 | 5.6 | 32.5 | Invention |
| 9000 | 6.0 | 34.5 | Invention |

### Example 2

100 parts of dimethyl terephthalate, 75 parts of ethylene glycol and 0.04 part of zinc acetate were introduced into a reaction vessel, and the ester interchange reaction was conducted by heating from 150°C to 220°C for 2 hours, as the methanol being produced was continuously distilled off from the reaction system. Then, the internal pressure was gradually decreased to 200 mmHg over an hour, as excessive ethylene glycol was being distilled off, and the reaction was completed. After thin-film distillation, white crystals of bis(ω-hydroxyethyl) terephthalate (purity: 99.5 %) were obtained.

2.6 parts of this bis(ω-hydroxyethyl) terephthalate and 2 parts of xylene were introduced into a reaction vessel equipped with a stirrer, dropping funnel, N2-feed pipe and distillation tube, and dissolved by heating at 110°C while N2 gas was let flow. Then, 1.0 part of phenylphosphonic dichloride was gradually dropped over 20 minutes from the dropping funnel while the inside temperature was kept at 110-120°C under stirring. The mole ratio of phenylphosphonic dichloride to dihydroxyl ingredient was 1:2. The reaction was further conducted at the same temperature for 15 minutes, then the temperature was increased to 130°C and the inside was gradually vacuumized to 5 mmHg for 30 minutes to distill off xylene. The reaction was further conducted at the same temperature for 30 minutes and a phosphorus-containing bishydroxyl compound (Flame-retardant A) was separated. As the results of NMR and liquid chromatographic analyses, it was found that the compound had the following structural formula:

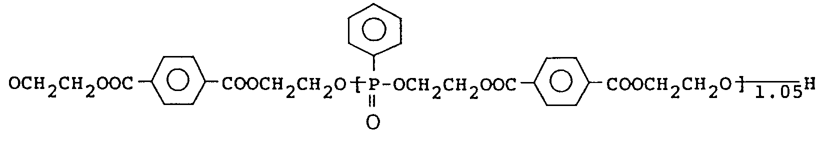

Then, 100 parts of dimethyl terephthalate, 72 parts of ethylene glycol and 0.04 part of zinc acetate were heated from 150°C to 220°C and the ester interchange reaction was conducted for 3 hours, as the methanol being produced was continuously distilled off from the reaction system. Then, 0.03 part of antimony trioxide and 16.0 parts of the above phosphorus-containing bishydroxyl compound: Flame-retardant A, were added and the internal pressure was gradually decreased by increasing the temperature until 280°C and 0.3 mmHg were finally reached. The condensation polymerization was conducted at 280°C and 0.3 mmHg for 3 hours. Then, the resulting polymer was extruded into strands which were then cut to pellets of 2.5 mm dia.×3 mm length. No phosphorus compound flame-retardant was detected on the top lid of the polymerizer or in the distilling ethylene glycol, so that it was found that no flame-retardants had been distilled out from the reaction system.

These pellets were dried to a moisture content of 0.005 %, and then melt-spun with an extruder at a spinning temperature of 288°C and a take-up speed of 800 m/min. Then, the spun yarn was drawn with a roller heater at 85°C at a draw ratio of 3.94 times and a draw rate of 1,000 m/min. and heat-set on a plate heater at 150°C to provide a 75d/24f drawn yarn (P content= 7,500 ppm).

Further, more flame-retardants, Flame-retardants B-F were synthesized by reacting the above dihydroxyl compound with phenylphosphonic dichloride in various mole ratios. The same as the Flame-retardant A, the above flame-retardants were copolymerized with a polyester so that the phosphorus content in the copolymer might be the same as the case of Flame-retardant A. These copolymers were melt-spun and drawn in the same manner as the above to produce 75d/24f drawn yarns. The thus obtained polyester copolymers were measured for the intrinsic viscosity [η], melting point, the number of times of flame contact and light-stability. The results are shown in Table 2.

**Table 2**

| Flame-retardant | | Intrinsic viscosity (η) | Melting point (°C) | Light fastness (grade) | Whiteness b-value | Number of times of flame contact (time) | Remarks |
|---|---|---|---|---|---|---|---|
| No. | Dihydroxyl compound: Phenylphosphonic dichloride (Molar ratio) | | | | | | |
| A | 2 : 1 | 0.66 | 252 | 5 | 1.5 | 5.8 | Invention |
| B | 5 : 3 | 0.64 | 250 | 5 | 1.6 | 5.6 | Invention |
| C | 3 : 2 | 0.61 | 248 | 4∼5 | 1.8 | 5.3 | Invention |
| D | 4 : 3 | 0.57 | 245 | 4 | 2.8 | 4.2 | Invention |
| E | 1 : 1 | 0.58 | 256 | 3∼4 | 2.2 | 4.5 | Comparative |
| F | 2.5 : 1 | 0.55 | 248 | 3 | 2.9 | 3.7 | Comparative |

As shown in Table 2, the copolymers using the phosphorus-containing bishydroxyl compound according to the present invention were able to be produced substantially without inhibiting the condensation polymerization reaction and had excellent whiteness, light-fastness and flame retardance. On the other hand, the copolymers outside the present invention (Flame-retardants E and F) posed problems such as suppression of polymerization rate, discoloration, deterioration of light-fastness and the like.

### Example 3

Various flame-retardants were synthesized by reacting various dihydroxyl compounds with various phosphonic acid dichlorides in a mole ratio of 2:1 in the same manner as Example 2. Then, according to the same manner as Example 2, polyester copolymers all having the same phosphorus content were manufactured, which were spun and drawn in the same manner to provide 75d/36f filaments. The performance of these filaments were evaluated in the same manner as Example 2. The results are shown in Tables 3 and 4.

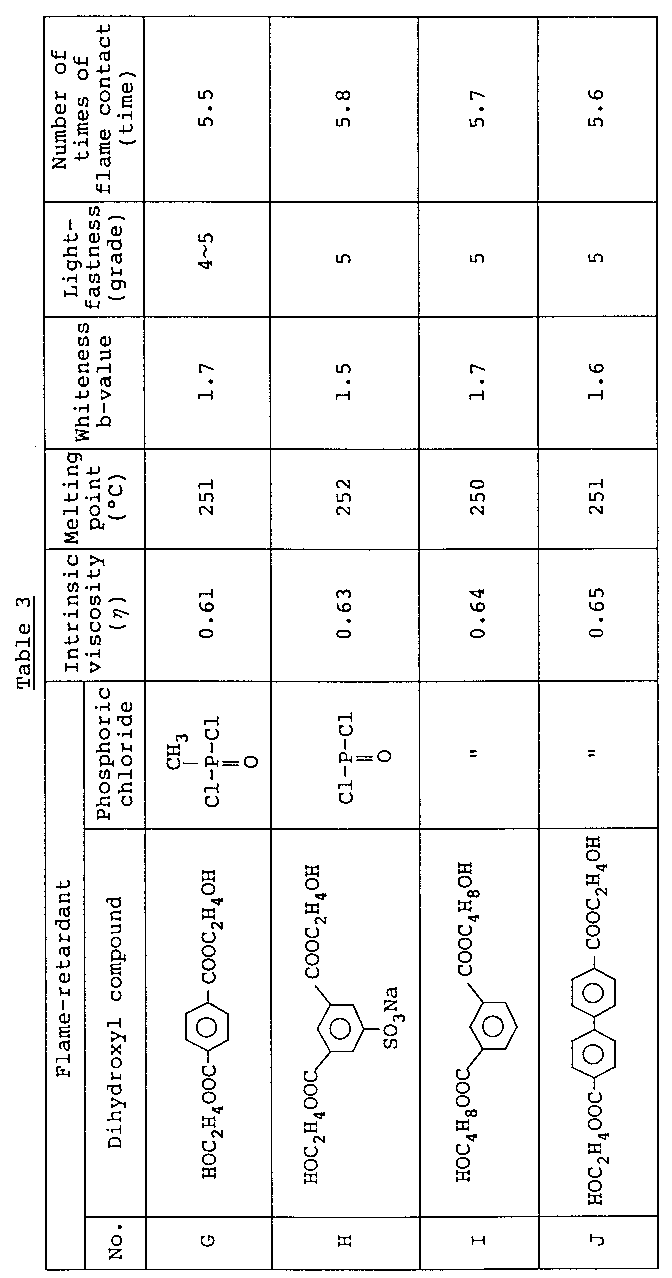

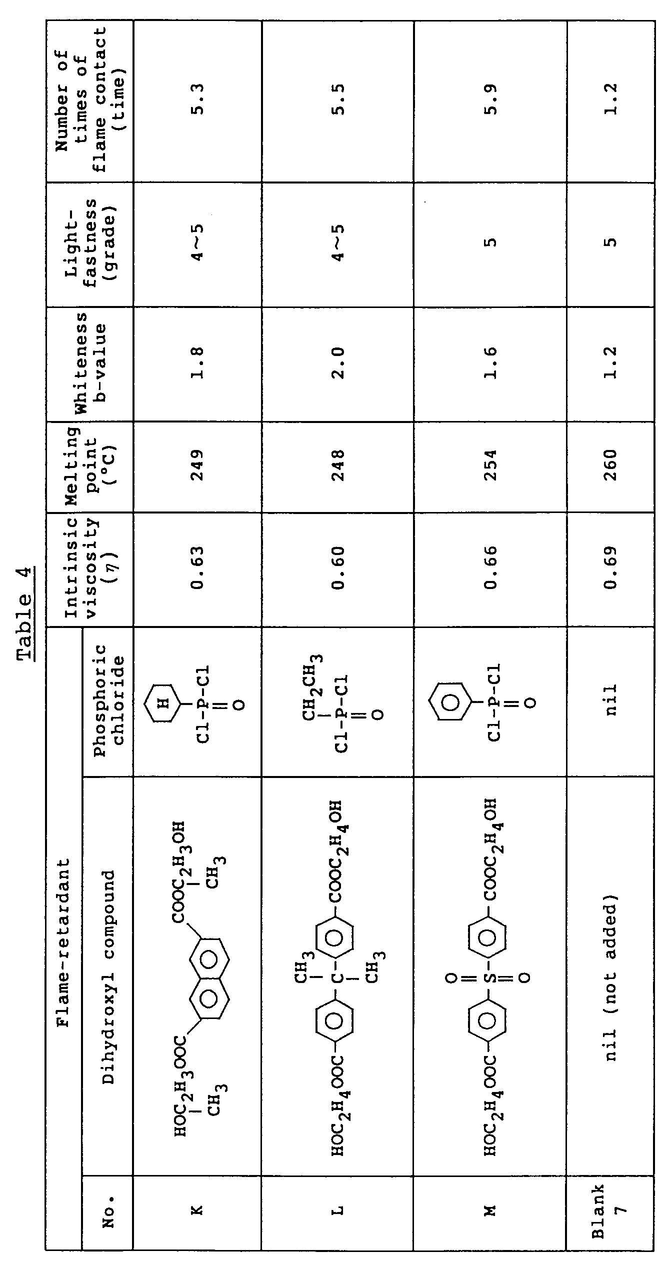

As shown in Tables 3 and 4, all of the copolyesters according to the present invention had excellent light-fastness and flame retardance. The derivatives, inter alia, having a P-substituted aryl group such as phenyl group had an excellent heat resistance, showing less lowering of viscosity and melting point as compared with alkyl derivatives.

### Example 4

Various polyester copolymers were manufactured in the same manner as Example 2, using the Flame-retardant A obtained in Example 2, except that the copolymerization ratio was varied. These copolymers were spun and drawn into 75d/24f drawn filaments, in the same manner as Example 2, which were measured for whiteness, light-fastness and the number of times of flame contact. The results are shown in Table 5.

**Table 5**

| Amount copolymerized (mole %) | P-content (ppm) | Whiteness (b-value) (b-value) | Light-fastness (grade) | Number of times of flame contact (time) | Remarks |
|---|---|---|---|---|---|
| 1 | 1,620 | 1.3 | 5 | 1.8 | Comparative |
| 2 | 3,180 | 1.6 | 5 | 3.8 | Invention |
| 5 | 7,500 | 1.7 | 5 | 5.7 | Invention |
| 10 | 14,800 | 2.0 | 5 | 5.9 | Invention |
| 15 | 21,250 | 2.5 | 4∼5 | 6.0 | Invention |
| 20 | 27,200 | 3.5 | 4 | 6.2 | Invention |
| 0 | 0 | 1.2 | 5 | 1.2 | Comparative |

As is clear from Table 5, it has been found that the filament having a phosphorus content of less than 2,000 ppm (No. 1) is deficient in flame retardant performance, and if it is unnecessarily increased, not only the flame retardance will be saturated but also the physical properties of the polyester are rather deteriorated. It is understood that those within the range defined by the present invention have excellent performances.

### Comparative Example 1

Bis(2-hydroxyethyl) phenylphosphine oxide was synthesized in the same manner as Example 2, except that ethylene glycol was used in lieu of the aromatic dihydroxyl compounds. This was subjected to condensation polymerization in the same manner as Example 2. During the condensation polymerization, phosphorus compounds were distilled out. As the result of measurement of the phosphorus content in the obtained polyester, the phosphorus remaining percentage was 29 %. This polyester copolymer was spun and drawn in the same manner as Example 2 and the performance of the resulting yarn was measured. As the result, the number of times of flame contact was so low as 2.1 which was inferior.

### Comparative Example 2

In the same manner as described in Example 1 of Japanese Patent Laid-open Application No. 53-068,756, dimethyl terephthalate and ethylene glycol were ester interchanged in the presence of zinc acetate dihydrate, then phenylphosphonic acid and antimony trioxide were successively added, and esterification and polymerization were conducted in the same conditions as described in the above patent application to provide a polyester copolymer. An appreciable quantity of phosphorus was detected in the reaction distillate. This polyester copolymer was spun and drawn. The performance of the resulting yarn was measured. As the result, it showed poor performances, i.e., the number of times of flame contact being 3.2, a color b value of 3.5 and a light-fastness of 3-4 grades.

### Example 5

Copolyester drawn yarns which had been modified with Flame-retardant A obtained in Example 2 and Flame-retardants H and I, respectively, were doubled into two ply yarns and knit with a circular knitting machine into hoses. These hose samples were high-pressure dyed with 2 % o.w.f. of Miketon Polyester Blue FBL and washed repetitively 20 times with a domestic washing machine and by means of dry cleaning, respectively, and then the number of times of flame contact was measured. The results are shown in Table 6.

**Table 6**

| Flame-retardant | Number of times of flame contact (time) | | | |
|---|---|---|---|---|
| | Before dyeing | After dyeing | Washing with water | Dry cleaning |
| Flame-retardant A | 5.8 | 5.8 | 5.7 | 5.9 |
| Flame-retardant H | 5.8 | 5.6 | 5.6 | 5.7 |
| Flame-retardant I | 5.7 | 5.7 | 5.7 | 5.8 |

As shown in Table 6, the flame-retardant copolyesters according to the present invention had extremely excellent heat resistance and durability under repeated washing.

### Manufacturing Example 3

100 parts of dimethyl terephthalate, 75 parts of ethylene glycol and 0.04 part of zinc acetate were introduced into a reaction vessel, heated from 150°C to 220°C as the methanol being produced was continuously distilled off from the reaction system, and the ester interchange reaction was completed by 2 hours to provide white crystals of bis(ω-hydroxyethyl) terephthalate (purity: 99.7 %).

25.5 parts of the white crystals and 50 parts of triclene were introduced into a four-neck flask equipped with a stirrer, dropping funnel, N₂ gas feed pipe and a cooling cylinder, and dissolved by heating at 50°C. Then, 19.5 parts of phenylphosphonic dichloride were gradually dropped, while the inside temperature was kept at not higher than 60°C under stirring. After the dropping had been finished, the reaction was conducted further for 40 minutes, then the temperature was increased to 80°C and the reaction was conducted for another 1 hour. Then the dropping funnel was replaced by a new one and the inside was gradually vacuumized to efflux the solvent completely. The resulting reaction product (Flame-retardant B) was a white non-opaque resinous substance having an average molecular weight of 11,500 (an average degree of polymerization: 29.8). The result of elemental analysis was as follows:
C: 57.39 %, H: 4.65 % and P: 8.08 %.

### Manufacturing Example 4

25.5 parts of the bis(ω-hydroxyethyl) terephthalate obtained in Manufacturing Example 3 and 0.2 part of calcium chloride were introduced into a reaction vessel and heat-melted at 120°C under nitrogen gas stream while stirring, and 19.5 parts of phenylphosphonic dichloride were dropped over 20 minutes. Then, reaction was conducted for 1.5 hours and a further reaction was conducted at 150°C for an hour. Then, the inside was gradually vacuumized to 2 mmHg and the reaction was further conducted for 30 minutes. After cooling, a light brown, transparent resinous substance (Flame-retardant C) was obtained. This substance had an average molecular weight of 8,700 (an average degree of polymerization of 22.4). Its elemental analysis value was: C: 63.13 %, H: 4.01 % and P: 6.86 %.

### Manufacturing Example 5

A white non-opaque resin (Flame-retardant D) was obtained in the same manner as Manufacturing Example 3, except that the bis(ω-hydroxyethyl) terephthalate employed was obtained by depolymerizing a polyester layer in the presence of ethylene glycol and an alkaline earth metal compound, and then thin-film distilled.

This resin had an average molecular weight of 12,300 (an average degree of polymerization of 32.5). Its elemental analysis value was: C: 57.42 %, H: 4.67 % and P: 8.12 %.

### Manufacturing Example 6

A pale-yellow resinous substance (Flame-retardant E) was obtained through polymerization conducted in the same manner as Manufacturing Example 3, except that methylphosphonic dichloride was used in lieu of the phenylphosphonic dichloride. This resin had an average molecular weight of 8,200 (an average degree of polymerization of 25.2). Its elemental analysis value was: C: 50.35 %, H: 5.07 % and P: 8.85 %.

### Comparative Manufacturing Example 1

23 parts of bisphenol A as a hydroxyl compound, 19.5 parts of phenylphosphonic dichloride and 0.2 part of calcium chloride were introduced into a vessel, reacted at 150°C for 2 hours, at 170°C for an hour and then at 200°C for 2 hours, under nitrogen gas stream, and further reacted at 250°C for an hour under a pressure of 20 mmHg and finally cooled down to provide a brownish solid substance. This substance had an average molecular weight of 7,800 (an average degree of polymerization of 19.2) and a melting point of 183-188°C. This was denoted as Flame-retardant Z.

### Example 6

The Flame-retardant B obtained in Manufacturing Example 3 was introduced into a vessel, melted by heating at 180°C under a vacuum, and then defoamed. A predetermined amount of this melt was fed by a measuring pump into a static mixer comprising 48 elements of 10 mm diameter and 1/d=1.5 which was heated at 285°C, under a nitrogen gas pressure of 0.5 atm.

On the other hand, a polyethylene terephthalate having an intrinsic viscosity of 0.67 was melted in an extruder and fed into the static mixer wherein the flame-retardant was mixed in an amount of 8 % by weight with the polyethylene terephthalate. The mixture was spun out from a spinneret at a rate of 30 g/min. by means of a measuring pump, taken up on a bobbin at a take-up speed of 900 m/min., and then drawn 3.97 times its original length according to a conventional process to provide a 75d/24f yarn having a tensile strength of 4.8 g/d and an elongation at break of 29.5 %. This yarn had a phosphorus content of 6,500 ppm, and exhibited excellent flame retardance and whiteness, evidenced by the number of times of flame contact of 5.2 and a b-value of 1.5, respectively.

Furthermore, this yarn was doubled and knit into hose with a circular knitting machine and scoured to remove oiling agents. Then, some of the hose were washed repetitively 40 times with a domestic washing machine and others were repetitively dry cleaned 20 times. As the results of measurement, the numbers of times of flame contact were 5.1 and 5.2, respectively, and no deterioration of performance in flame retardance was observed.

Furthermore, the above yarn was false-twisted at a false-twisting temperature of 200°C, with a first feed rate of +1.8 % and a second feed rate of +4.2 %, at a twist number of 3,600 t.p.m. The resulting bulky yarn had uniform crimps and a good bulkiness, with stress-strain characteristics, i.e., a tensile strength of 3.9 g/d, an elongation at break of 28 % and a yarn strength retention (false-twisted yarn/gray yarn) of 81.2 %.

### Comparative Example 3

A 75d/24f drawn yarn was obtained in the same manner as Example 6, except that the Flame-retardant Z obtained in Comparative Manufacturing Example 1 was used and the melting temperature was 240°C. This yarn had excellent properties, evidenced by a tensile strength of 4.3 g/d, elongation at break of 27.8 %, b-value of 1.9 and the number of times of flame contact of 5.3. Further, its hose showed a good durability in the number of times of flame contact, that is, 5.2 times after washing. However, as a result of false-twisting conducted in the same manner as in Example 6, since the yarn could not be processed at 200°C due to frequent yarn breakage, it was conducted at 190°C. The resulting false-twisted yarn was poor in bulkiness and contained some non-untwisted filaments, and showed a tensile strength of 2.7 g/d, an elongation at break of 21.4 % and a yarn strength retention after false-twisting of 62.8 %.

### Comparative Example 4

A mixture of 79 parts of phenylphosphonic acid and 125 parts of ethylene glycol was admixed with 0.03 part of metallic sodium and reacted by heating to gradually increase the temperature to 80°C under nitrogen gas stream. Then, vacuumizing at 100°C to distill off excessive ethylene glycol, heating was conducted for 3 hours to provide phenylphosphonic acid glycol ester.

On the other hand, a mixture of 97 parts of dimethyl terephthalate, 67 parts of ethylene glycol and 0.09 part of calcium acetate was heated at 160-220°C and an ester interchange reaction was conducted for 3 hours. Then, 85 parts of the thus obtained phenylphosphonic acid glycol ester and 0.05 part of antimony trioxide added thereto were heated at 220°C for 30 minutes. Then, gradually vacuumizing to 1 mmHg or less, reaction was conducted at 230-250°C for 2 hours to provide a crystal clear resinous substance (Flame-retardant X). This resinous substance, as a result of analysis, had an average molecular weight of 4,300 and a phosphorus content of 2.5 %. Thus, it was found that the phosphorus remaining percentage of 42.1 % of the theoretical value and that a plenty of phosphorus compounds had been distilled out.

25 parts of this Flame-retardant X and 75 parts of a polyester were blended in the same manner as Example 6, and the blend was spun into yarn. The resulting yarn had a tensile strength of 3.9 g/d, an elongation at break of 27.2 % and the number of times of flame contact of 3.3 (however, this lot was regarded as off-grade, because at least 3 yarns among 10 yarns showed the number of flame contact being 3) .

### Example 7

Blend-spinning and drawing were conducted to provide 75d/24f drawn yarns in the same manner as Example 6, except that the Flame-retardants C, D and E obtained in Manufacturing Examples 4, 5 and 6, respectively, were used. Various characteristics of these yarns were determined in the manner according to Example 6. The results are shown in Table 7.

**Table 7**

| Flame-retardant | Tensile strength (g/d) | Elongation at break (%) | Whiteness (b-value) | Light fastness (grade) | Number of times of flame contact (time) | | |
|---|---|---|---|---|---|---|---|
| | | | | | Unwashed | Washed | Dry cleaning |
| C | 4.88 | 30.2 | 1.8 | 5 | 5.1 | 5.0 | 5.2 |
| D | 4.92 | 29.8 | 1.7 | 5 | 5.3 | 5.2 | 5.3 |
| E | 4.68 | 28.9 | 2.1 | 4∼5 | 5.2 | 5.1 | 5.2 |
| nil (Blank) | 5.12 | 30.1 | 1.5 | 5 | 1.1 | 1.0 | 1.2 |

As clear from Table 7, it is understood that the products of the present invention have excellent performances.

### Example 8

100 parts of polyester and 50 parts of a flame-retardant were melt-blended in the same manner as Example 6, except that the Flame-retardant D obtained in Manufacturing Example 5 was used and a belt-driven extruder was employed in lieu of the spinning machine. The molten blend was extruded in the form of gut into water ant cut to master chips. The chips were dried and mixed with ordinary polyester chips in various blend ratios, then spun with a spinning machine and drawn to produce various 75d/24f drawn yarns. The various properties of the yarns were measured in the manner according to Example 6. The results are shown in Table 8.

**Table 8**

| Blend ratio | P-content (wt%) | Tensile strength (g/d) | Elongation at break (%) | Light-fastness (grade) | Number of times of flame contact (time) | Remarks Remarks |
|---|---|---|---|---|---|---|
| PET : Master | | | | | | |
| 100 : 8 | 0.20 | 4.95 | 30.2 | 5 | 2.3 | Invention |
| 100 : 15 | 0.35 | 4.88 | 31.1 | 5 | 3.7 | Invention |
| 100 : 20 | 0.46 | 4.85 | 29.8 | 5 | 4.7 | Invention |
| 100 : 30 | 0.64 | 4.82 | 29.5 | 5 | 5.2 | Invention |
| 100 : 50 | 0.91 | 4.69 | 30.1 | 4∼5 | 5.8 | Invention |
| 100 : 100 | 1.38 | 3.96 | 29.9 | 4∼5 | 5.9 | Invention |

As apparent from Table 8, the yarns having a phosphorus content within the range defined in the present invention have excellent properties and performances.

### Example 9

70 parts of bis(hydroxyethyl) terephthalate (BHET), 30 parts of the above bis(2,2'-carboxyethyl) phenylphosphine oxide and 0.03 part of tetrabutoxy titanate were introduced into a polymerizer and melted. Then, with gradually increasing the temperature, the internal pressure was decreased and finally condensation polymerization was conducted at 255°C and 0.3 mmHg for 3 hours. Then, the resulting polymer was extruded into strands which were cut to pellets of 2.5 mm dia. and 3 mm length. Thus, Compound A containing 3.8 % by weight of phosphorus was obtained. Then, bis(hydroxyethyl) terephthalate, as a starting material, and antimony trioxide, as a polymerization catalyst, were heat-melted at 170°C. With gradually increasing the temperature, the internal pressure was decreased and finally condensation polymerization was conducted at 250°C and 0.3 mmHg for 3 hours. The polymerization was continued as the increase of the melt viscosity was being monitored by rotational torque of a stirrer. At the point of time when the intrinsic viscosity [η] had reached 0.2, the above Compound A was added in such an amount that the phosphorus content in the final polymer product might become a value as shown in Table 9 and the polymerization was continued until the predetermined viscosity (intrinsic viscosity [η]=0.62) had been reached. Then, the resulting polymer was extruded into strands which were cut to pellets of 2.5 mm dia.×3 mm length.

These pellets were dried to a moisture content of 0.005 %, and then melt-spun with an extruder at a spinning temperature of 288°C and a take-up speed of 800 m/min. Then, the spun yarn was drawn with a roller heater at 75°Cat a draw ratio of 3.9 times and a draw rate of 1,000 m/min. and heat-set on a plate heater at 150°C to provide a 75d/24f drawn yarn. The yarn had a good quality showing a tensile strength of 4.7-5.8 g/d and an elongation at break of 30-45%.

This drawn yarn was doubled and knit on a circular knitting machine into a hose which was then scoured and tested for flame retardance. In the flame retardance test, a swatch 100 mm long and 1 g weight was cut out from the hose and the number of times of flame contact according to the 45° coil method was found. The results are shown in Table 9.

**Table 9**

| P-content (ppm) | Number of times of flame contact (time) | LOI value | Remarks |
|---|---|---|---|
| 0 | 1.2 | 20.5 | Comparative Example |
| 1500 | 1.9 | 22.5 | Comparative Example |
| 2000 | 3.0 | 23.5 | Invention |
| 2500 | 3.2 | 25.5 | Invention |
| 3000 | 3.8 | 26.5 | Invention |
| 4800 | 4.2 | 30.5 | Invention |
| 7200 | 5.5 | 32.0 | Invention |
| 9000 | 6.1 | 34.5 | Invention |

### Example 10

Copolymers comprising various phosphorus-containing compounds (1)-(7), respectively, in an amount of 4 % by weight, as shown in Table 10 were prepared. Each of these copolymers was blended in a polyester during its polymerization, in the same manner as Example 9, so that the phosphorus content in the final polymer might become 6,500 ppm. After the polymerization had been completed, the polymer was recovered and spun into 75d/24f flame-retardant polyester filaments, in the same manner as Example 9.

The performances of the various compounds are shown in Table 10.

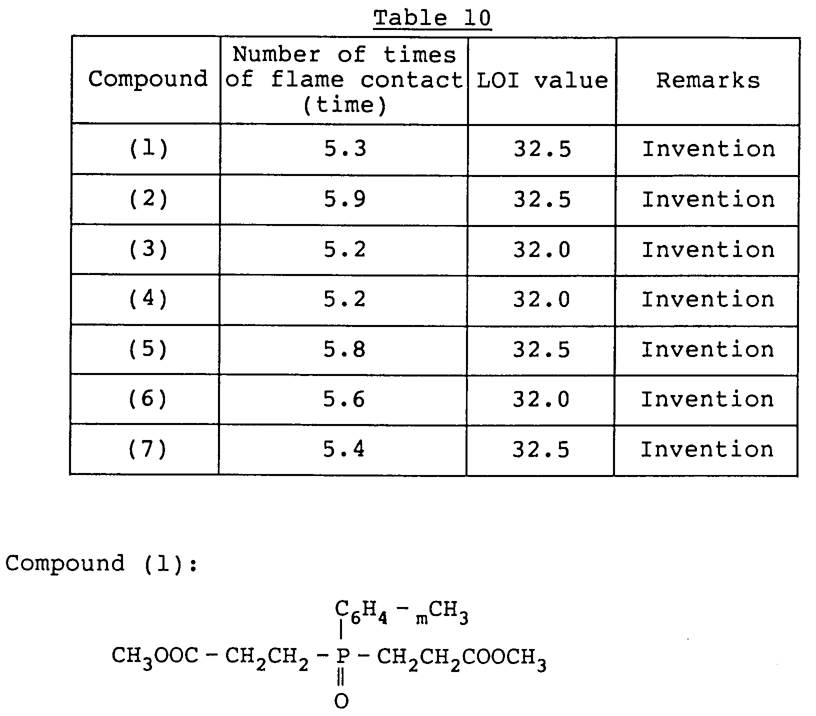

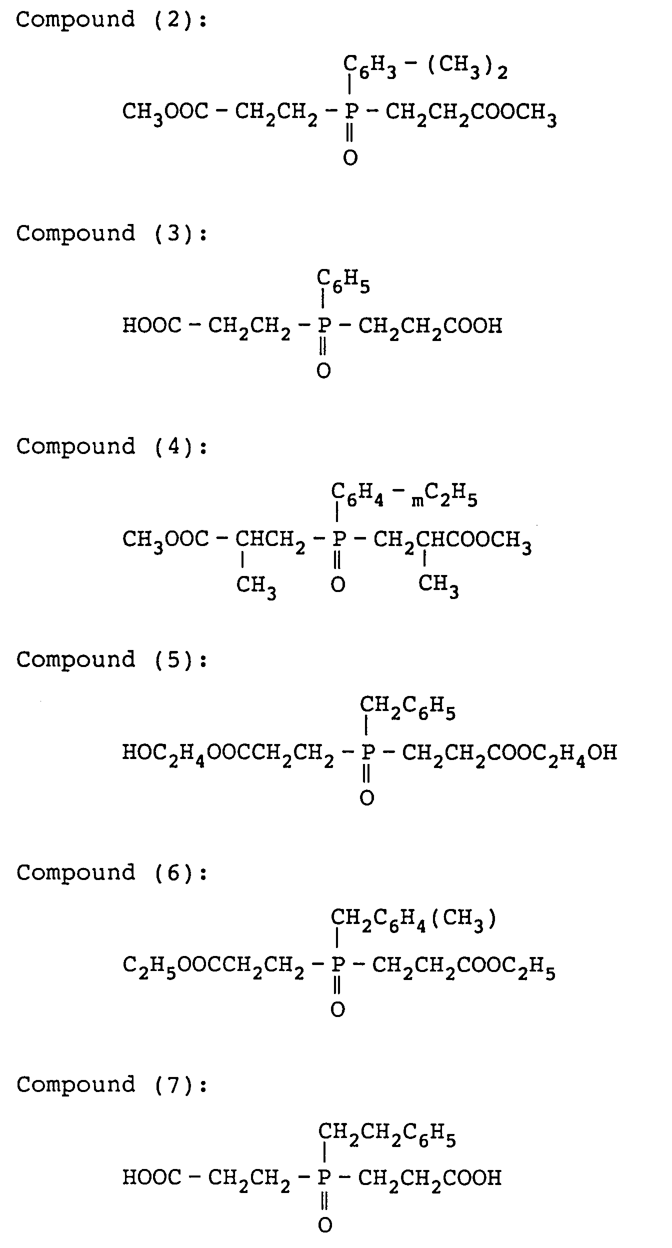

### Example 11

70 parts of bis(hydroxyethyl) terephthalate (BHET), 30 parts of the phosphorus-containing compound shown in the structural formula: 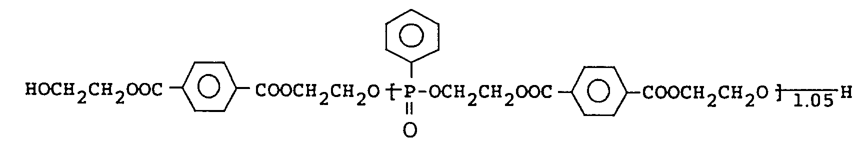 and 0.06 part of antimony trioxide were introduced into a polymerizer and melted. Then, with gradually increasing the temperature, the internal pressure was decreased and finally polymerization was conducted at 235°C and 0.3 mmHg for 3 hours. Then, the resulting polymer was extruded into strands which were cut to pellets of 2.5 mm dia. and 3 mm length. Thus, Compound B was obtained.

Then, an ordinary polyester based polymer was manufactured from bis(hydroxyethyl) terephthalate (BHET), as a starting material, and antimony trioxide, as a polymerization catalyst, in the following manner. The BHET with the catalyst was heat-melted at 170°C. Then, with gradually increasing the temperature, the internal pressure was decreased and finally polymerization was conducted at 267°C and 0.3 mmHg. The progress of the polymerization was monitored by rotational torque of a stirrer. At the point of time when the intrinsic viscosity [η] had reached 0.2, the above Compound B was added in such an amount that the phosphorus content might become a value as shown in Table 11 and the polymerization was continued until the intrinsic viscosity [η] of the polymer had reached 0.6. Then, the resulting polymer was extruded into strands which were cut to pellets of 2.5 mm dia.×3 mm length.

These pellets were dried to a moisture content of 0.005 %, and then melt-spun with an extruder at a spinning temperature of 285°C and a take-up speed of 950 m/min. Then, the spun yarn was drawn with a roller heater at 80°C at a draw ratio of 3.87 times and a draw rate of 750 m/min. and heat-set on a plate heater at 150°C to provide a 75d/24f drawn yarn.

This drawn yarn was doubled and knit on a circular knitting machine into a hose which was then scoured and tested for flame retardance and light-fastness. Namely, in the flame retardance test, a swatch 100 mm long, 1 g weight was cut out from the hose, rolled into a rod shape and the number of times of flame contact according to the 45° coil method was found. The results are shown in Table 11.

**Table 11**

| P-content (ppm) | Number of times of flame contact (time) | LOI value | Remarks |
|---|---|---|---|
| 0 | 1.7 | 20.1 | Comparative Example |
| 1500 | 2.3 | 22.7 | Comparative Example |
| 2000 | 2.9 | 23.4 | Invention |
| 4000 | 4.0 | 27.5 | Invention |
| 7000 | 5.5 | 32.3 | Invention |
| 9000 | 5.7 | 35.2 | Invention |

### Example 12

Copolymers comprising various phosphorus-containing compounds (8)-(10), respectively, in an amount of 4 %, as shown in Table 12 were prepared in the same manner as Example 11. Each of these copolymers was blended in a polyester during its polymerization, in the same manner as Example 11, so that the phosphorus content in the final polymer might become 6,700 ppm. After the polymerization had been completed, the polymer was recovered and spun into 75d/24f filaments, in the same manner as Example 11. The performances are shown in Table 12.

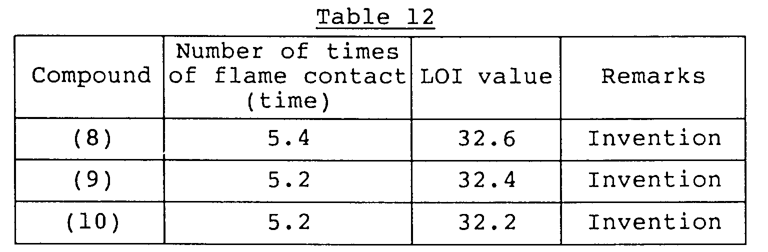

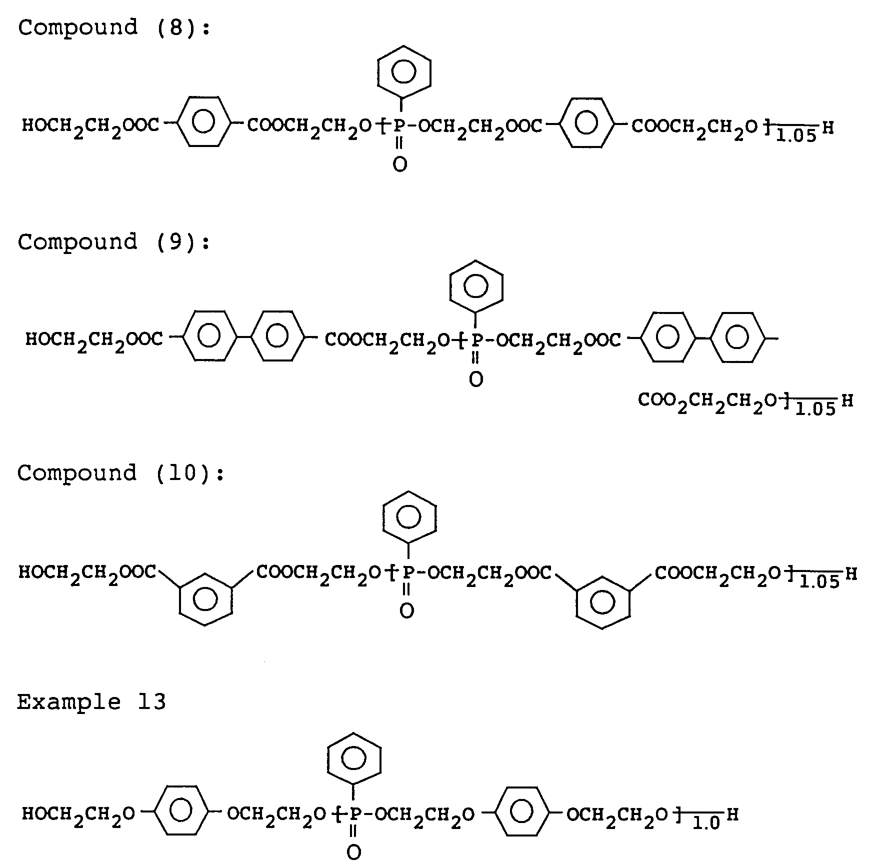

70 parts of bis(hydroxyethyl) terephthalate (BHET), 30 parts of the phosphorus-containing compound shown in the above structural formula and 0.03 part of tetrabutoxy titanate were introduced into a polymerizer and melted. Then, with gradually increasing the temperature, the internal pressure was decreased and finally polymerization was conducted at 255°C and 0.3 mmHg for 3 hours. Then, the resulting polymer was extruded into strands which were cut to pellets of 2.5 mm dia. and 3 mm length. The resulting polymer had an intrinsic viscosity [η] of 0.64 and a melting point of 237°C.

Then, an ordinary polyester based polymer was manufactured from bis(hydroxyethyl) terephthalate (BHET), as a starting material, and antimony trioxide, as a polymerization catalyst, in the following manner. The BHET with the catalyst was heat-melted at 170°C. Then, with gradually increasing the temperature, the internal pressure was decreased and finally polymerization was conducted at 270°C and 0.3 mmHg. The progress of the polymerization was monitored by rotational torque of a stirrer. At the point of time when the intrinsic viscosity [η] had reached 0.2, the above phosphorus-containing compound was added in such an amount that the phosphorus content in the final polymer might become a value as shown in Table 13 and the polymerization was continued until the intrinsic viscosity [η] of the polymer had reached 0.6. Then, the resulting polymer was extruded into strands which were cut to pellets of 2.5 mm dia.×3 mm length.

These pellets were dried to a moisture content of 0.005 %, and then melt-spun with an extruder at a spinning temperature of 288°C 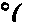 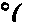 and a take-up speed of 800 m/min. Then, the spun yarn was drawn with a roller heater at 75°C at a draw ratio of 3.94 times and a draw rate of 800 m/min. and heat-set on a plate heater at 140°C to provide a 75d/24f drawn yarn.

This drawn yarn was doubled and knit on a circular knitting machine into a hose which was then scoured and tested for flame retardance and light-fastness. Namely, in the flame retardance test, a swatch 100 mm long and 1 g weight was cut out from the hose, rolled into a rod shape and the number of times of flame contact according to the 45° coil method was found. The results are shown in Table 13.

**Table 13**

| P-content (ppm) | Number of times of flame contact (time) | LOI value | Remarks |
|---|---|---|---|
| 0 | 1.7 | 20.2 | Comparative Example |
| 1500 | 2.3 | 22.6 | Comparative Example |
| 2000 | 3.0 | 23.6 | Invention |
| 4000 | 4.1 | 27.8 | Invention |
| 7000 | 5.4 | 32.1 | Invention |
| 9000 | 6.3 | 35.1 | Invention |

### Example 14

Copolymers comprising two phosphorus-containing compounds (11) and (12), respectively, in an amount of 4 %, as shown in Table 14 were prepared. Each of these copolymers was blended in a polyester during its polymerization, in the same manner as Example 13, so that the phosphorus content in the final polymer might become 6,700 ppm. After the polymerization had been completed, the polymer was recovered and spun into 75d/24f filaments, in the same manner as Example 13. The performances are shown in Table 14.

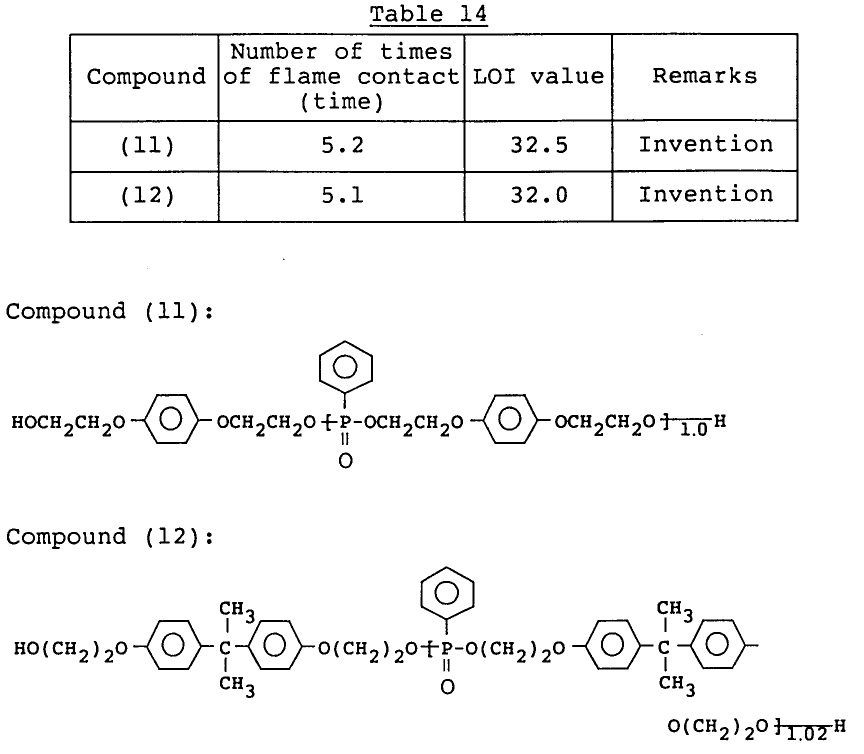

### Industrial applicability

As explained above, the flame-retardant polyester copolymers according to the present invention have flame-resistive phosphorus atoms incorporated into the main chains thereof, and these phosphorus atoms are not eluted or do not come off in shaping processes of the polyester copolymers or during use, washing or the like, of shaped products thereof. Therefore, the polyester copolymers of the present invention are useful owing to everlasting flame-retardant performances thereof. Furthermore, the polyester copolymers of the present invention are provided with excellent light-fastness and whiteness as well as a good dyeability, with neither deteriorating mechanical and thermal characteristics inherent in polyesters nor impairing hand of textile products thereof. Besides, these copolymers according to the invention, since they are provided with the flame retardance only by phosphorus atoms, do not evolve toxic gases harmful to human body even when shaped products of these copolymers are contacted with flames, so that they are very safe and useful.

Further, the polyester compositions comprising the polyphosphonate blended therein according to the present invention, when they are shaped into fibers, filaments, films or plastic shaped products, can be industrially shaped with ease without sublimating or volatilizing the polyphosphonate flame-retardants. The resulting shaped articles have a good flame-retardance and are industrially useful by virtue of an extremely high whiteness, excellent durability under repeated washing, light-fastness and heat resistance, compatibility with disperse dyes, ultraviolet stability, and the like.

In particular, in the case where the polyphosphonate comprising, for example, bis(ω-hydroxyethyl) terephthalate and phenylphosphonic dichloride is blended with a polyethylene terephthalate, this polyphosphonate, since it has a structure similar to that of the polyethylene terephthalate and has a high compatibility with the polyethylene terephthalate and little hindrance in crystallization, can provide the polyester compositions according to the present invention with remarkable features such that excellent characteristics are maintained even under severe treatments, such as false-twisting or the like.

Furthermore, the flame-retardant polyester compositions according to the present invention are manufactured by incorporating a phosphorus-containing polymer which contains flame-resistive phosphorus atoms in its polyesteric or polyetheric main chain thereof into a polyester during polymerization of the polyester. The blended components in the compositions of the present invention, therefore, are in a mixed state equivalent to that of complete polymers, wherein the phosphorus atoms are included in a very stabilized composition. Additionally, by varying the blend ratio of the phosphorus-containing copolymers, the flame retardance can be readily controlled and easily adapted to the production lot size and the variety of grade and type of the products.

The flame-retardant polyesters according to the present invention can be spun and drawn into filaments and yarns by conventional processes, and post-treated according to conventional processes. Besides, in weaving and knitting, conventional looms or knitting machines can be employed without any particular care. Further, the polyesters according to the present invention can be blend spun or conjugate-spun with ordinary polyesters, cation-dyable polyesters or the like, composite-woven with the ordinary fibers or other fibers, such as cotton, polyester, acrylic or the like fibers, or can provide flame-retardant polyester products of high technology and high quality, such as woven fabrics of multi-layer structure. Alternatively, shaped articles, such as films, foils, bottles or the like, can be readity produced from the polymers of the present invention by a conventional process, such as extrusion, compression or injection molding or the like. As such a textile product or molded product, examples include heavy-gage woven fabrics, garments, carpets, curtains, canvas, nonwoven fabrics, bottles, films, structural parts, mechanical transmission parts, and the like.

As explained above, the process in the present invention can very easily provide diversified flame-retardant fibers and high performance flame-retardant fibers, industrially with ease, at low cost, and is very useful.

## Claims

1. A polyester copolymer characterized by being obtained by copolymerizing a thermoplastic polyester with at least one of phosphorus-containing compounds or derivatives thereof, in such an amount that a phosphorus atom content may be 0.2-3.0 % by weight based on the total weight, said phosphorus-containing compounds or derivatives thereof being represented by the following general formula (1): 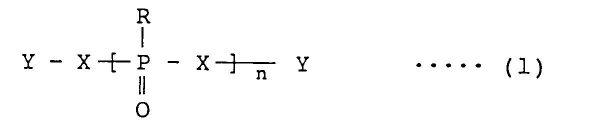 wherein R is an alkyl, aryl or aralkyl group having 1-9 carbon atoms, and X is selected from moieties represented by the following general formulae (2), (3) and (4):
- R₁COO - (2)
- OR₁O(̵OC - A - COOR₂O)̵ₐ (3)
(̵OR₂)̵_{b}O - A - O(̵R₂O)̵_{c} (4)
wherein R₁ is an alkylene group having 1-4 carbon atoms, binding to phosphorus, R₂ is an alkylene group having 2-4 carbon atoms, A is a halogen-free divalent aromatic residue, a = 1-10, and b and c = 0-5; when X is formula (2), n = 1 and Y is hydrogen or an alkyl or hydroxyalkyl group having 1-4 carbon atoms; and when X is formula (3) or (4), n = 1-10 and Y is hydrogen.

2. A polyester composition characterized by being obtained by blending a thermoplastic polyester with a polyphosphonate compound, in such an amount that a phosphorus atom content may be 0.2-3.0 % by weight based on the total weight, said polyphosphonate compound being obtained by polycondensing a compound represented by the following general formula (3') or (4'):
HOR₂O(̵OC - A - COOR₂O)̵ₐH (3')
H(̵OR₂)̵_{b}O - A - O(̵R₂O)̵_{c}H (4')
wherein R₂, A, a, b and c are the same as the above, with at least one P-monosubstituted phosphonic dichloride represented by the formula (5): 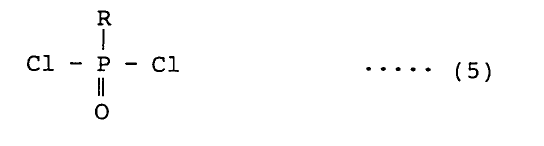 wherein R is the same as defined above.

3. A polyester composition characterized by being obtained by copolymerizing thermoplastic polyester-forming components with a comonomer selected from the group consisting of dicarboxylic acids, diols, diamines and diisocyanates, and at least one of phosphorus-containing compounds or derivatives thereof in such an amount that a phosphorus atom content may be at least 1.0 % by weight based on the total weight, said phosphorus-containing compounds or derivatives thereof being represented by the following general formula (1): 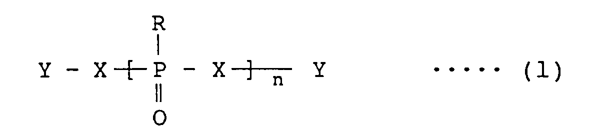 wherein R is an alkyl, aryl or aralkyl group having 1-9 carbon atoms, and X is selected from moieties represented by the following general formulae (2), (3) and (4):
- R₁COO - (2)
- OR₁O(̵OC - A - COOR₂O)̵ₐ (3)
(̵OR₂)̵_{b}O - A - O(̵R₂O)̵_{c} (4)
wherein R₁ is an alkylene group having 1-4 carbon atoms, binding to phosphorus, R₂ is an alkylene group having 2-4 carbon atoms, A is a halogen-free divalent aromatic residue, a = 1-10, and b and c = 0-5; when X is formula (2), n = 1 and Y is hydrogen or an alkyl or hydroxyalkyl group having 1-4 carbon atoms; and when X is formula (3) or (4), n = 1-10 and Y is hydrogen, and then blending a phosphorus-free thermoplastic polyester with the resulting phosphorus-containing copolymer in such an amount that a phosphorus atom content in the blend may be 0.2-3.0 % by weight based on the total weight.

4. The copolymer according to claim 1, wherein said thermoplastic polyester comprises an aromatic polyester comprising at least 80 mole % of an alkylene terephthalate recurring unit.

5. The composition according to claims 2 or 3, wherein said thermoplastic polyester comprises an aromatic polyester comprising at least 80 mole % of an alkylene terephthalate recurring unit.

6. A shaped body selected from the group consisting of fibers, films and resinous molded bodies, composed of the polyester copolymer according to claim 1.

7. A shaped body selected from the group consisting of fibers, films and resinous molded bodies, composed of the polyester composition according to claim 2.

8. A shaped body selected from the group consisting of fibers, films and resinous molded bodies, composed of the polyester composition according to claim 3.
